# EUROPEAN PATENT SPECIFICATION

(11) **EP 1 964 894 B1**
(45) Date of publication and mention of the grant of the patent: **23.01.2013**
(21) Application number: 08003361.6
(22) Date of filing: 25.02.2008
(51) Int. Cl.: C09D 11/00

(54) **Ink composition, inkjetrecording method, printed material, method for producing planographic printing plate, and planographic printing plate**
Tintenzusammensetzung, Tintenstrahlaufzeichnungsverfahren, Drucksachen, Verfahren zur Herstellung einer Flachdruckplatte und Flachdruckplatte
Composition d'encre, procédé d'enregistrement de jet d'encre, matériau d'impression, procédé de production de plaque d'impression planographique et plaque d'impression planographique

(30) Priority: 27.02.2007 JP 2007047723
(43) Date of publication of application: 03.09.2008
(73) Proprietor: FUJIFILM Corporation, Minato-ku Tokyo (JP)
(72) Inventor: Watanabe, Kotaro, Ashigarakami-gun Kanagawa (JP)
(74) Representative: HOFFMANN EITLE

(56) References cited:
- EP-A- 1 696 008
- EP-A- 1 795 564
- US-A1- 2004 050 292

## Description

### BACKGROUND OF THE INVENTION

### Field of the Invention

The present invention relates to an ink composition favorably used for inkjet recording, an inkjet recording method, a printed material produced therewith, a planographic printing plate produced using the ink composition, and a method for producing a planographic printing plate.

### Description of the Related Art

Cyclic ether compounds such as 3-membered rings and 4-membered rings are known to exhibit high reactivity, and are used as polymerizable compounds contained in curable compositions subjected to photocationic polymerization or heat polymerization using an acid anhydride (for example, see Japanese Patent Application Laid-Open (JP-A) Nos. 11-43540 and 11-60702.)

There are many image-recording methods of forming an image on a recording medium such as paper based on image data signals, including those in electrophotographic process, sublimation or fusion heat-transfer process, and inkjet process. Among them, the inkjet process is advantageous in that it allow printing in a cheaper device at a lower running cost, because it forms an image directly on a recording medium by ejecting ink only in desirable image region and thus uses the ink more efficiently. In addition, the inkjet process is also less noisy and thus advantageous as an image-recording method. The inkjet process allows printing not only on plain paper but also on non-water absorbing recording media such as a plastic sheet or metal plate, but is imperatively required to increase the printing speed and improve the image quality. The time required for drying and curing the ink droplets after printing significantly influences the efficiency in producing printed materials and sharpness of the printed image.

In the inkjet recoding processes, there is a recording method by using an inkjet recording ink that cures by irradiation with radiation ray. In the method, it is possible to improve the printing efficiency and the quality of image, by curing the ink droplet by irradiating it with radiation ray immediately or after a particular period from ejection. By increasing the sensitivity of the inkjet recording ink which is curable by irradiation with a radiation ray such as ultraviolet light, the ink has higher curability for radiation rays, which brings about many benefits such as the improvement in inkjet recording efficiency, reduction in power consumption, prolongation of the lifetime of radiation ray generator owing to the decrease in the load, and prevention of volatilization of low-molecular substances caused by insufficient curing. Further, the increase in the sensitivity particularly increases the strength of the image formed using the inkjet recording ink. In particular, a planographic printing plate produced using the ink composition has increased strength in the image portion thereof, and thus provides higher printing durability.

In recent year, curable inkjet systems employing a radiation ray such as ultraviolet light is receiving attention because they give relatively less odor, produce fast-drying images, and allow recording on a recording medium which does not absorb ink. A cationic polymerizable ink composition which provides excellent adhesiveness to a recording medium with low shrinkage when exposed to ultraviolet light is supposed (for example, see JP-A No. 9-183928). However, the cationic polymerizable ink is not sufficiently stable during storage because of the reaction caused by the acid generated over time, which is an obstacle to the commercialization of the ink. Therefore, in order to improve the storage stability, a technique of adding a basic compound or a thermal base generator is supposed (for example, see JP-A Nos. 2003-312121, 2003-341217, and 2004-91558). However, there is another problem that the curing sensitivity of the ink deteriorates because the basic compound inhibits the function of the acid generated upon exposure

However, in recent years, a technique of digitizing image information using a computer by electronically processing, storing, and outputting the information has become widespread, and a new image output system that can be used for the above technique has been desired. In particular, a method for making a printing plate without treatment with a developing solution is studied, and a method for directly making a planographic printing plate using an inkjet recording ink composition is studied (for example, see JP-A No. 54-117203). The method comprises steps of image-wisely ejecting ink on the support surface which is preferably hydrophilic, and curing the ink by irradiation with active radiation to make a printing plate having a desired image (preferably a hydrophobic image).

Besides the above, a method using an ink composition containing a fluorine group-containing polymer is investigated (for example, JP-A No. 2006-182970) as a method for producing a planographic printing plate from an ink composition for inkjet recording.

In order to form an image portion of a planographic printing plate, the curability of an ink ejected onto a support, the adhesiveness to a support, etc. are demanded. However, in transportation of such planographic printing plates while keeping them superposed, the planographic printing plates are rubbed with each other during the transportation or an image formed on a planographic printing plate is transferred to the substrate of another planographic printing plate in contact with the image. It has been desired to improve rubbing resistance or stickiness of an image after image formation.

### SUMMARY OF THE INVENTION

The present invention has been made in view of the above circumstances and provides ink composition, inkjet recording method, printed material, method of producing planographic printing plate and planographic printing plate.

A first aspect of the invention provides an ink composition including at least an initiator, a polymerizable monomer and a polymer comprising a fluorine containing group and a polymerizable group.

A second aspect of the invention provides an inkjet recording method including: ejecting the ink composition of the invention onto a recording medium using an inkjet recording apparatus, and curing the ejected ink composition by irradiating the ejected ink composition with active radiation.

A third aspect of the invention provides a printed material recorded by the inkjet recording method of the invention.

A forth aspect of the invention provides a method of producing a planographic printing plate comprising: ejecting the ink composition of the invention onto a support, and forming a hydrophobic image on the support by irradiating the ejected ink composition with active radiation to cure the ink composition.

A fifth aspect of the invention provide a planographic printing plate produced by the method for producing a planographic plate of the invention.

### BRIEF DESCRIPTION OF THE DRAWINGS

Fig. 1A is a side view and top view each illustrating the mold used in the embossing test in the Examples;
Fig. 1B is a side view and top view each illustrating the mold used in the embossing test in the Examples; and
Fig. 2 is a perspective view illustrating the wood mold used in the vacuum forming test in the Examples.

### DETAILED DESCRIPTION OF THE INVENTION

### [Ink Composition]

The ink composition of the present invention a ink composition that includes at least an initiator, a polymerizable monomer and a polymer comprising a fluorine containing group and a polymerizable group. Use of the ink composition of the invention makes it possible to form images being excellent in rubbing resistance and having controlled stickiness on the surface.

Although the action of the invention is not clear, it is surmised to be as follows. Since the polymer comprising a fluorine containing group and a polymerizable group contained in the ink composition of the invention has low surface energy, a cured film surface obtained from this ink composition is coated with the polymer comprising a fluorine containing group and a polymerizable group and therefore images with excellent rubbing resistance may be formed. Moreover, it is possible to increase the density of polymerizable groups in the cured film surface by the polymer comprising a fluorine containing group and a polymerizable group and the surface viscoelasticity after the curing is improved. It therefore is possible to form images with controlled stickiness in the surface.

The ink composition of the invention may be favorably used also in an exemplary embodiment where processing is applied after forming an image on a recording medium such as a support.

Today, printed materials, such as decoration sheet having been formed, are used in various applications. For example, in membrane switch surface sheets used in electric appliances and the like, an image is formed on a thin plastic sheet (e.g. sheets of PET, polycarbonate, polystyrene, etc. about 100 µm in thickness) and then the sheet is subjected to embossing in the switch portion (clicking portion) for the purpose of imparting a click feeling. In many cases, a printed material is matte finished or a printed material after formation of an image is subjected to embossing for producing three-dimensional appearance in design.

Vending machine of drink products, such as drinking water, tea and juice, have spread widely, and dummy showpieces which show products to be sold are displayed in such vending machines. Such dummy showpieces are produced so that the product image may be advertised strongly, by preparing first a flat support by decoration printing on a transparent thermoplastic resin sheet, producing a highly standing article by deeply drawing the support into a half-cut shape of a full-size drink product container (in some occasion, as deep as 25 mm or more), and applying light from the back thereof.

As processing methods for producing such a deep-drawn article of a decorated thermoplastic resin sheet, vacuum forming, pressure forming or vacuum-pressure forming is most favorable. Vacuum forming is basically a technique including preheating a flat support to a temperature at which it may be thermally deformed, and then suck it onto a mold by vacuuming, thereby keeping it in contact firmly with the mold and cooling it while stretching it. Pressure forming is a technique including pressuring a support to a mold from the opposite side, thereby keeping it in contact firmly with the mold and cooling it. In vacuum-pressure forming, the vacuuming and the pressuring are carried out simultaneously.

As properties of inks to be used for printed materials to be subjected to such processing, resistance of a formed image (printed material) to cracking, peeling, and the like and excellent impact resistance, flexibility and substrate adhesiveness of a cured film are required. On the other hand, the ink composition of the invention is strong against impact because its surface may be cured efficiently due to inclusion of a polymer comprising a fluorine containing group and a polymerizable group. In addition, in the ink composition of the invention, it is possible to secure curability of the surface (a non-stickiness film with high viscoelasticity) even when a bulk is fabricated into a soft film (a soft film with low viscoelasticity). Therefore, it may demonstrate a particularly favorable effect in applications where the aforementioned processing is applied after image formation. Among the above-mentioned applications of the ink composition of the invention, vacuum forming is particularly preferred.

The ink composition of the invention is an ink composition which may be cured by irradiation with radiation. The "radiation" referred to in the invention is not particularly restricted as long as it may provide energy allowing an initiator species to be generated in an composition by the irradiation therewith, and broadly includes α rays, γ rays, X rays, ultraviolet laight, visible light, and electron beams. Among these, ultraviolet light and electron beams are preferable from the viewpoint of curing sensitivity and the availability of equipment, and ultraviolet rays are particularly preferable. Therefore, the ink composition of the invention is preferably an ink composition which may be cured by irradiation with ultraviolet light as radiation.

The ink composition of the invention preferably contains a colorant when an image is formed by curing the composition by irradiation with radiation.

The ink composition of the invention is described in detail below. In the following description, a "polymer comprising a fluorine containing group and a polymerizable group", which is sometimes referred simply to as "fluorine-containing polymer," is described first in detail and then other components are described.

Further, in the present specification, a phrase "... to..." represents a range including the numeral values represented before and after "to" as a minimum value and a maximum value, respectively.

### Fluorine group-containing polymer having polymerizable group

The polymer comprising a fluorine containing group and a polymerizable group (fluorine-containing polymer) according to the invention is preferably one satisfying the following requirement (A) or (B).
(A) A polymer having, on a side chain, a group derived from a fluoroaliphatic compound produced by a telomerization method or an oligomerization method (referred also as to fluoroariphatic group).
(B) A polymer having a structure represented by the following formula (I):

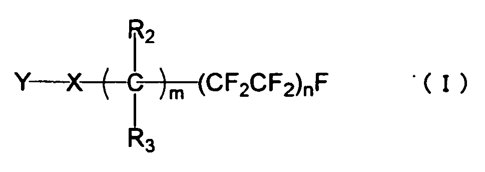

In formula (I), R₂ and R₃ each independently represent a hydrogen atom or an alkyl group having from 1 to 4 carbon atoms, Y represents a polymer chain, X represents a covalent bond or a bivalent linking group (organic group), m represents an integer of 0 or more, and n represents an integer of 1 or more. In addition, when m is 2 or more, the functional groups on the carbon atoms adjacent to one another (namely, R₂'s or R₃'s bonding to carbon atoms adjacent to each other) may link together to form an aliphatic ring.

The fluorine-containing polymer in the invention, which includes a polymer satisfying the aforementioned requirement (A) or (B), may be in any form of polymer. As a specific form, acrylic resin, methacrylic resin, styryl resin, polyester resin, polyurethane resin, polycarbonate resin, polyamide resin, polyacetal resin, phenol/formaldehyde condensation resin, polyvinylphenol resin, maleic anhydride/α-olefin resin, α-hetero substituted methacrylic resin, or the like may be used. Among these, acrylic resin, methacrylic resin, styryl resin, polyester resin and polyurethane resin are useful, and acrylic resin, methacrylic resin, and polyurethane resin are particularly useful.

### (A) A polymer having, on a side chain, a group derived from a fluoroaliphatic compound produced by a telomerization method or an oligomerization method.

The fluorine-containing polymer in the invention is preferably a polymer having, on a side chain, a group derived from a fluoroaliphatic compound produced by a telomerization method, occasionally referred to as telomer method, or an oligomerization method, occasionally referred to as oligomer method. Methods for the preparation of such fluoroaliphatic compounds are disclosed in, for instance, "Fussokagoubutsu no Gosei to Kinou (Synthesis and Functions of Fluorine Compounds)", edited by ISHIKAWA Nobuo, published by CMC Company, 1987, pp. 117-118; and "Chemistry of Organic Fluorine Compounds II" (Monograph 187, Edited by Milos Hudlicky and Attila E. Pavlath, American Chemical Society, 1995, pp. 747-752.

The telomerization method is a method for the synthesis of a telomer by subjecting a fluorine-containing vinyl compound such as tetrafluoroethylene to radical polymerization using an alkyl halide having a high chain transfer coefficient such as an iodide as a telogen. Synthesis Example 1 shown below is one specific example.

Synthesis Example 1

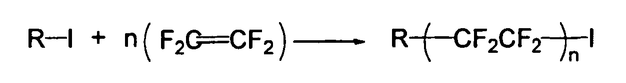

The resulting fluorine-terminated telomers are usually terminal-modified properly as shown in Synthesis Example 2 below, to give fluoroaliphatic compounds. These compounds are, if necessary, transferred to a desired monomer structure, and then used for preparation of fluoroaliphatic group-containing polymers.

Synthesis Example 2

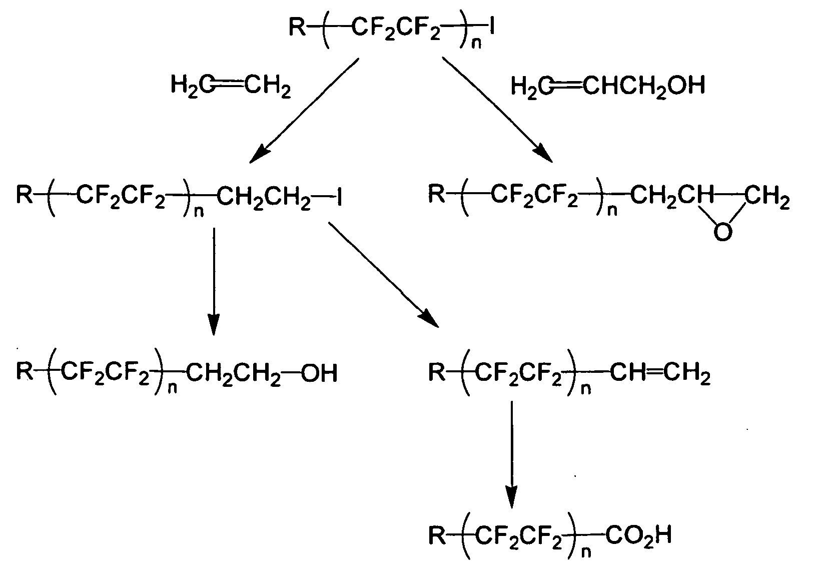

As a monomer produced by the telomer method, monomers represented by the following formula [TM-1] are preferred.

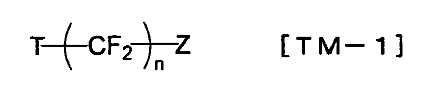

In formula [TM-1], T represents one group selected from (T Group) given below, Z represents one group selected from (Z Group) given below, and n denotes an integer of from 0 to 20.

### (T Group)

-CF₃

-CF₂CF₃

-CF₂CF₂CF₃

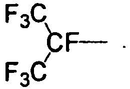

-CF₂CF₂H

(Z Group)

-CH₂OH -CH=CHCH₂OH

-CH₂CH₂OH -CH₂CHlCH₂OH

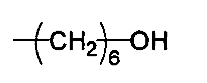

-OCF(CF₃)CH₂OH

-CO₂H -l

-COCl -Br

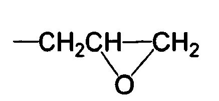

-CH₂CH₂l

-CH=CH₂ -CH₂l

-CH₂NH₂

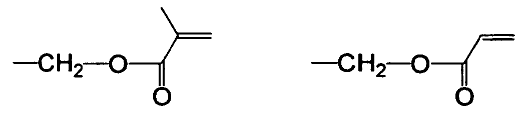

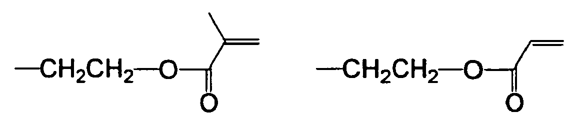

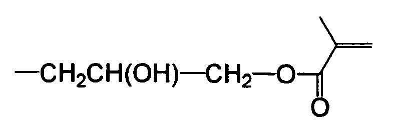

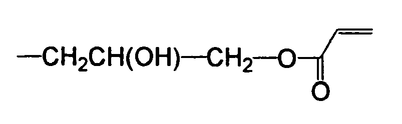

Compounds in which the group represented by Z in formula [TM-1] is one group selected from the (Z' Group) are particularly preferred because they have an acryloyl group or methacryloyl group on the terminal of the molecule and therefore it is possible to easily obtain polymers having aforementioned groups derived from fluoroaliphatic compounds (namely, fluorine-containing polymers) by vinyl polymerization.

(Z' Group)

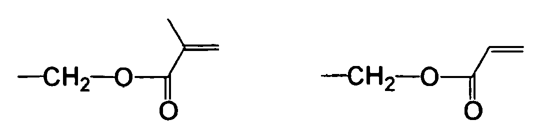

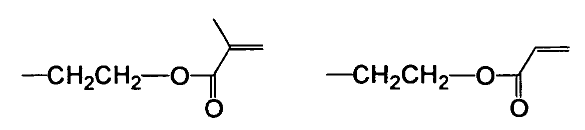

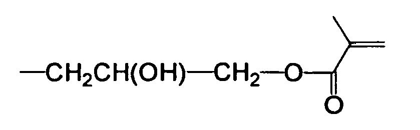

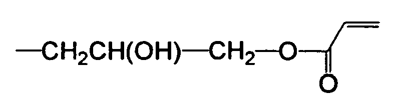

Specific examples of compounds produced by the above-mentioned telomer method suitable as a compound to be introduced into a side chain of a fluorine-containing polymer in the invention, in other words, examples of compounds including monomers represented by the formula [TM-1] as a major component include the compounds shown below.

Examples include fluorine-containing chemicals available from Daikin Chemicals Sales Co., Ltd. such as A-1110, A-1210, A-1310, A-1420, A-1620, A-1820, A-2020, A-1260, A-1460, A-1660, A-1860, A-1435, A-1635, A-1835, A-1473, A-1637, A-1837, A-1514, A-3420, A-3620, A-3820, A-4020, A-3260, A-3460, A-3660, A-3860, A-3637, A-3837, A-5210, A-5410, A-5610, A-5810, A-7110, A-7210, A-7310, A-9211, C-1100, C-1200, C-1300, C-1400, C-1500, C-1600, C-1700, C-1800, C-1900, C-2000, C-5200, C-5400, C-5600, C-5800, C-5208, C-5408, C-5608, C-6008, C-8200, C-8300, C-8500, C-9211, C-8208, C-8308, C-8508, C-9216, E-1430, E-1630, E-1830, E-2030, E-3430, E-3630, E-3830, E-4030, E-5244, E-5444, E-5644, E-5844, F-1420, F-1620, F-1820, F-2020, I-1200, I-1300, I-1400, I-1600, I-1700, I-1800, I-2000, I-1420, I-1620, I-1820, I-2020, I-3200, I-3400, I-3600, I-3800, I-4000, I-3620, I-3820, I-4020, I-5200, I-5400, I-5600, I-8208, I-8207, I-8407, I-8607, M-1110, M-1210, M-1420, M-1620, M-1820, M-2020, M-3420, M-3620, M-3820, M-4020, M-3433, M-3633, M-3833, M-4033, M-5210, M-5410, M-5610, M-5810, M-6010, M-7210, M-7310, R-1110, R-1210, R-1420, R-1620, R-1820, R-2020, R-1433, R-1633, R-1833, R-3420, R-3620, R-3820, R-4020, R-3433, R-5210, R-5410, R-5610, R-5810, 6010, R-7210,R-7310, U-1310, U-1710, and CHEMINOX FA, FA-M, FAAC, FAAC-M, FAMAC, FAMAC-M, which are produced by Nippon Mektron, Ltd.

Compounds produced by the aforementioned telomer method may easily be converted into polymers having, on side chains thereof, fluoroaliphatic groups according to a method known to one of ordinary skill in the art.

In the invention, fluoroaliphatic compounds produced by the oligomerization method (oligomer method) are also preferred. The oligomerization method is a method for the preparation of an oligomer by cationic polymerization of tetrafluoroethylene using potassium fluoride or cesium fluoride as a catalyst in a polar solvent such as diglyme. Synthesis Example 3 shown below is one specific example. A fluoroaliphatic compound obtained by the oligomer method may be converted into a polymer having, on side chains thereof, groups derived from fluoroaliphatic groups (namely, fluorine-containing polymer), through appropriate chemical modification by making use of reactive groups (unsaturated bonds) present on the resulting oligomer obtained through the polymerization as in the case of the foregoing telomerization method.

### Synthesis Example 3

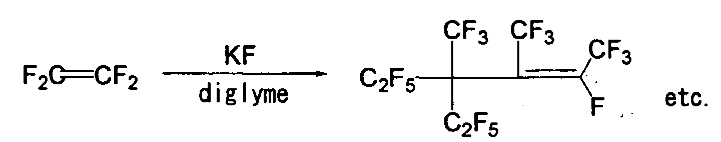

### (B) Polymer having a structure represented by formula I

In the invention, a polymer comprising a fluorine containing group and a polymerizable group (namely, fluorine-containing polymer) having a structure of the following formula (I) is preferred from the viewpoint of uneven distribution in the ink surface.

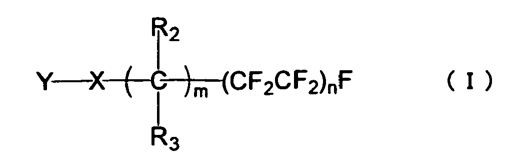

In formula (I), R₂ and R₃ each independently represent a hydrogen atom or an alkyl group having from 1 to 4 carbon atoms, Y represents a polymer chain, X represents a covalent bond or a bivalent linking group (organic group), m represents an integer of 0 or more, and n represents an integer of 1 or more. In addition, when m is 2 or more, the functional groups on the carbon atoms adjacent to one another (namely, R₂'s or R₃'s bonding to carbon atoms adjacent to each other) may link together to form an aliphatic ring.

Regarding the fluorine-containing polymers having a structure represented by the formula (I) shown above in the invention, the "n" in formula (I) is preferably from 1 to 10, more preferably from 1 to 4, and particularly preferably 2 or 3.

That is, it has been found that the fluorine-containing polymer in the invention develops excellent performance when the structure of side chain portions bonding to polymer chains is the structure represented by formula (IB) given below and n = 2 or 3.

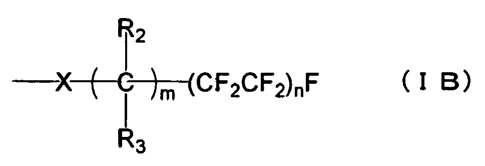

In formula (IB), R₂, R₃, X, m and n each have the same meanings as those of R₂, R₃, X, m and n in formula (I).

The alkyl groups having 1 to 4 carbon atoms represented by R₂ and R₃ in formulas (I) and (IB) include a methyl group, an ethyl group, a propyl group, an isopropyl group, a n-butyl group, an isobutyl group, a tert-butyl group, a hydrogen atom and a methyl group are preferable as R₂ and R₃, and a hydrogen atom is more preferable.

In formulas (I) and (IB), the covalent bond represented by X shows the case of directly bonding to a polymer main chain. Examples of such a bivalent linking group (organic group) include -O-, -S-, -N(R₄)- and -CO-. Among these, -O- is particularly preferred.

R₄ represents a hydrogen atom or an alkyl group having 1 to 4 carbon atoms. Examples of the alkyl group include a methyl group, an ethyl group, a propyl group, an isopropyl group, a n-butyl group, an isobutyl group and a tert-butyl group. A hydrogen atom and a methyl group are preferable as R₄.

m represents an integer of 0 or more, and an integer of 2 to 8 is preferred. In particular, it is preferable that m = 2. When m is 2 or more, functional groups on carbon atoms adjacent to one another may link together to form an aliphatic ring.

n represents an integer of 1 or more, and an integer of 1 to 10 is preferred. Here, n is particularly preferably from 1 to 4, and it is desirable that n is 2 or 3 in the fluorine-containing polymer in the invention.

In formula (I), Y represents a polymer chain. Examples of the polymer chain represented by Y are as follows.

As a specific form of the polymer chain represented by Y, acrylic resin, methacrylic resin, styryl resin, polyester resin, polyurethane resin, polycarbonate resin, polyamide resin, polyacetal resin, phenol/formaldehyde condensation resin, polyvinylphenol resin, maleic anhydride/α-olefin resin, α-hetero substituted methacrylic resin, or the like may be used. Among these, acrylic resin, methacrylic resin, styryl resin, polyester resin and polyurethane resin are useful, and acrylic resin, methacrylic resin, and polyurethane resin are particularly useful.

### Method for production of fluorine-containing polymers in the invention

Next, more specific methods for producing the fluorine-containing polymers in the invention including the polymers satisfying the aforementioned requirements (A) and (B) is described below.

The fluorine-containing polymers in the invention may easily be obtained according to methods known to persons skilled in the art, such as condensation polymerization, addition condensation and ring-opening polymerization using an appropriate polymerizable monomer. The polymers satisfying requirement (A) may be produced by appropriately choosing a raw material of the fluorine-containing monomer. The polymers satisfying requirement (B) may be produced by choosing a raw material appropriately at the time of the polymer production or polymerization and, if necessary, further mixing or mixing a polymer after polymerization.

Methods for producing the polymers satisfying requirement (B), namely polymers having a structure represented formula (I) previously shown, are described in more detail below by referring, as examples, to acrylic resin and methacrylic resin, which are most useful and excellent in applicability to polymer production.

Among the fluorine-containing polymers in the invention, examples of preferable exemplary embodiments of polymers corresponding to acrylic resin include polymers resulting from polymerization using a monomer represented by formula (II) shown below.

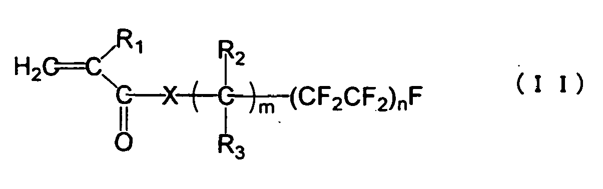

In formula (II), R₁ represents a hydrogen atom, a halogen atom, a methyl group which may have a substituent, or an ethyl group which may have a substituent. Further, R₂, R₃, X, m and n each have the same meanings as those of R₂, R₃, X, m and n in formula (IB).

Examples of the halogen atom represented by R₁ in formula (II) include a fluorine atom, a chlorine atom and a bromine atom.

The following are specific examples of the monomers represented by formula (II) used in the invention, which include specific examples of monomers for use in the production of polymers having a structure represented by formula (I).

(Examples of n= 4)

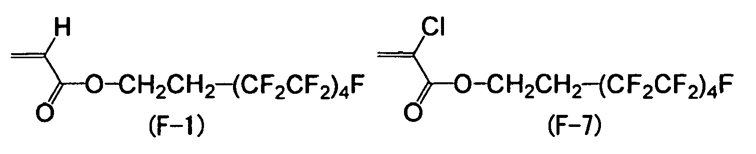

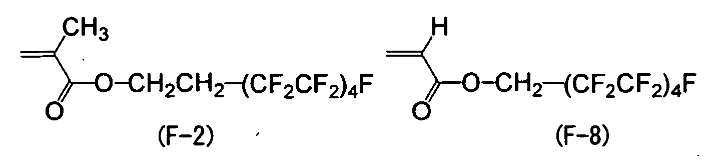

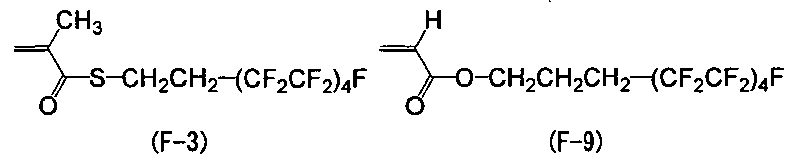

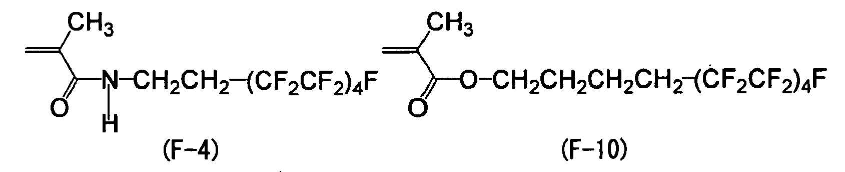

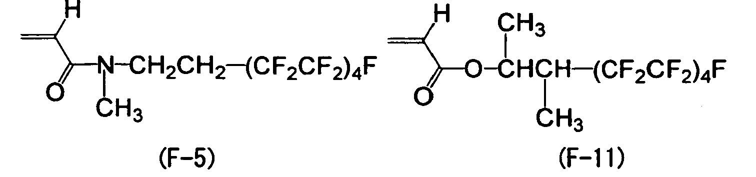

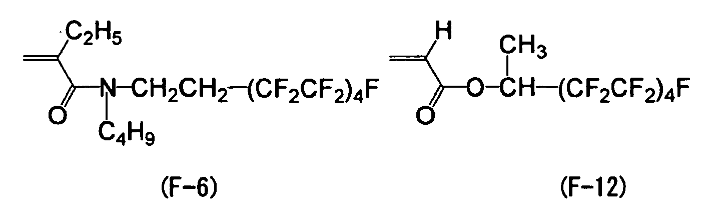

(Examples of n= 3)

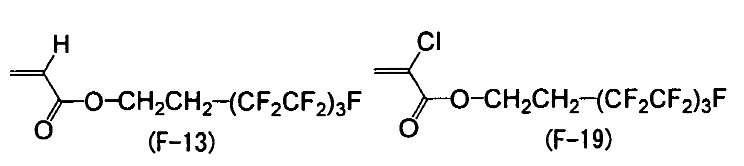

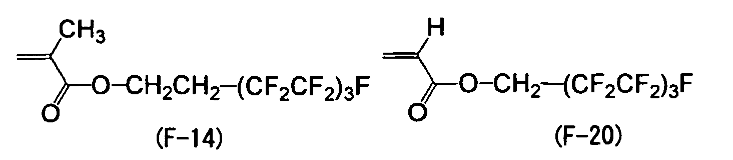

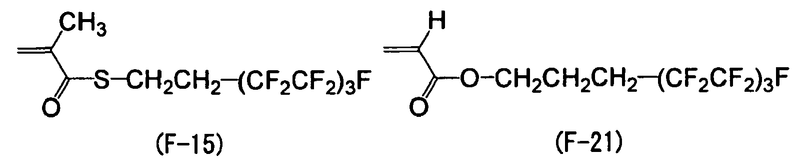

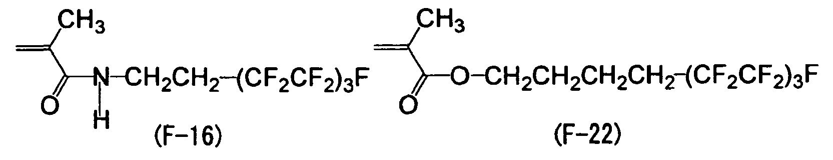

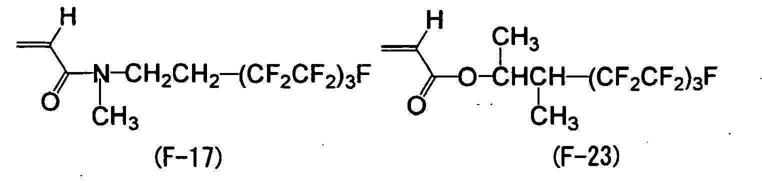

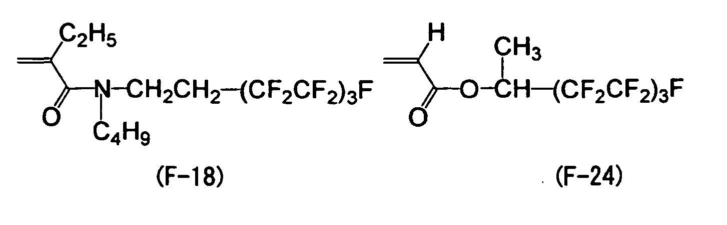

(Examples of n= 1)

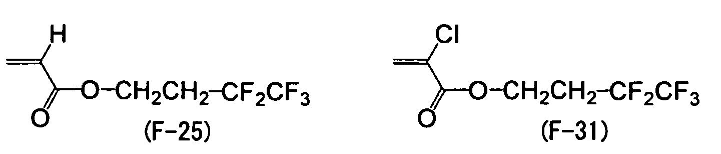

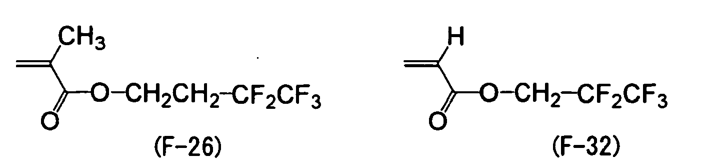

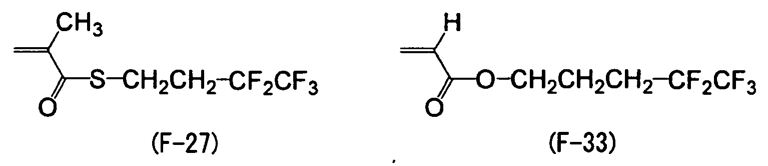

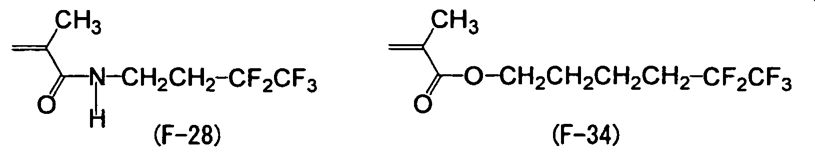

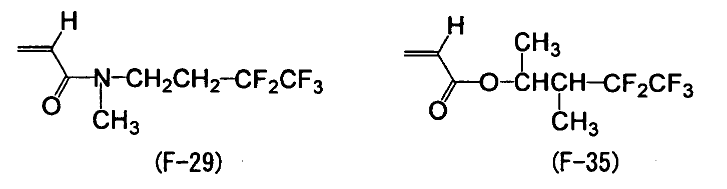

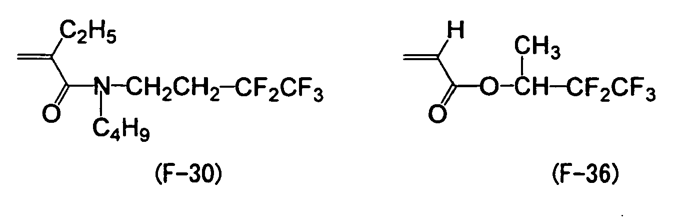

(Examples of n= 2)

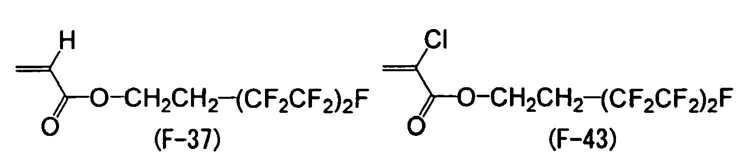

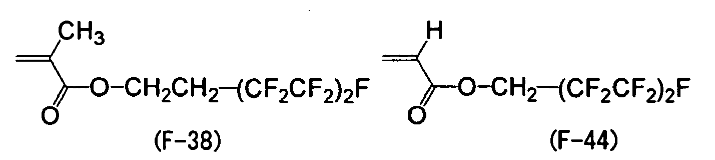

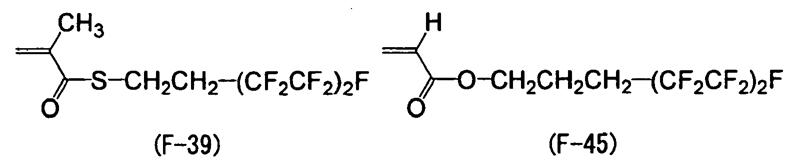

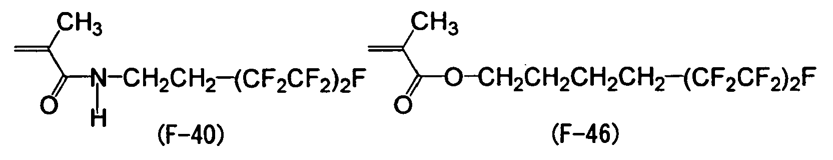

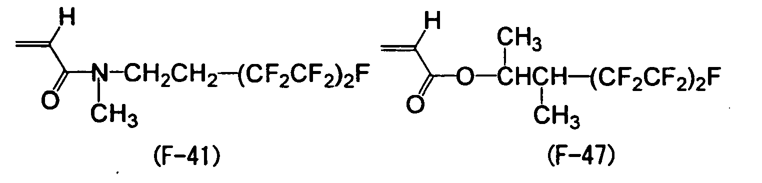

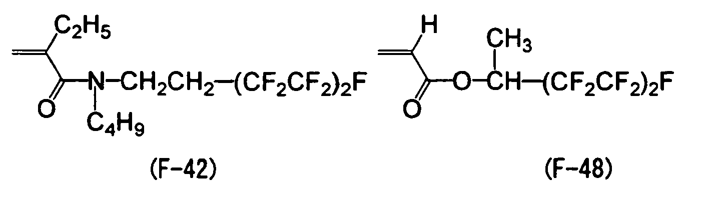

As monomers for use in the production of the fluorine-containing polymers in the invention), monomers having an "n" in formula (II) of from 1 to 10 are preferred, more preferably from 1 to 4, and particularly preferably 2 or 3 among the fluorine-containing monomers represented by formula (II).

In addition, the fluorine-containing polymers in the invention preferably contain 4 mmol or more of fluorine groups in 1 gram-molecule from the viewpoint of surface orientation, and preferably contain it up to 25 mmol in 1 gram-molecule from the viewpoint of ink solubility. A more desirable range is from 4 mmol to 8 mmol in 1 gram-molecule.

The fluorine-containing polymer in the invention is required to contain a monomer having a polymerizable group as a copolymerization component from the viewpoint of improvement in stickiness. Examples of the polymerizable groups contained in the fluorine-containing polymers in the invention include polymerizable groups of cationic polymerization, anionic polymerization, or radical polymerization. Polymerizable groups of cationic polymerization or radical polymerization are more preferred. The polymerizable group of cationic polymerization is preferably cyclic ether polymerization. The polymerizable group of radical polymerization is preferably a polymerizable group having an ethylenically unsaturated bond which is radically polymerizable. The polymerizable groups of cationic polymerization and radical polymerization are described in detail below.

### - Polymerizable group of cationic polymerization -

Examples of the polymerizable group of cationic polymerization include substituents having a cyclic ether group, such as an epoxy group, an oxetane group, and an oxolane group.

When the polymerizable group is a cyclic ether group, it is preferably a cyclic ether group having 2 to 6 carbon atoms, and more preferably a cyclic ether group having 2 to 3 carbon atoms. Further, the cyclic ether group may be a monocyclic ring or polycyclic ring. Among these, an epoxy group is particularly preferable. From the viewpoint of cationic polymerizability, a cyclic ether group shown below is particularly preferred as a cyclic ether group.

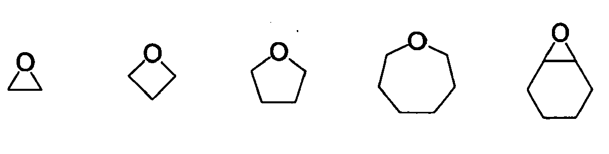

To a carbon atom constituting a cyclic ether group, a substituent may have been introduced. Examples of substituents which may be introduced include alkyl groups having 1 to 18 carbon atoms, cycloalkyl groups having 3 to 12 carbon atoms, aryl groups having 6 to 14 carbon atoms, alkoxy groups having 1 to 18 carbon atoms, aryloxy groups having 6 to 10 carbon atoms, alkylamino groups having 1 to 18 carbon atoms and arylamino groups having 6 to 10 carbon atoms.

The fluorine-containing polymer in the invention preferably contains polymerizable groups such as cyclic ether groups in an amount of 2.5 mmol or more in 1 gram-molecule from the viewpoint of reactivity. In the fluorine-containing polymer in the invention, the polymerizable groups such as cyclic ether groups present in the molecule may be either the same or different.

### - Polymerizable group of radical polymerization -

Examples of the polymerizable group of radical polymerization include polymerizable groups having a radically-polymerizable ethylenically-unsaturated bond, which may be any substituents having at least one radically-polymerizable ethylenically-unsaturated bond in the polymer. Examples of such polymerizable groups having a radically-polymerizable ethylenically-unsaturated bond include radically polymerizable groups such as unsaturated carboxylic acid ester groups, e.g. an acrylic acid ester group, a methacrylic acid ester group, an itaconic acid ester group, a crotonic acid ester group, an isocrotonic acid ester group and a maleic acid ester group, and styrene group. In particular, a methacrylic acid ester group and an acrylic acid ester group are preferred.

A preferable exemplary embodiment of the fluorine-containing polymer in the invention is a methacrylic resin or an acrylic resin. The molecular weight of the fluorine-containing polymer is preferably from 5,000 to 60,000, more preferably from 5,000 to 30,000, and particularly preferably from 5,000 to 20,000. The content of the fluorine-containing polymer in the invention is preferably from 0.2 to 5 mass%, more preferably from 0.2 to 3 mass %, and particularly preferably from 0.2 to 1.5 mass %. The exemplary embodiment in which the effect of the fluorine-containing polymer in the invention is shown best is an exemplary embodiment where the ink contains a large amount of monofunctional monomers. The content of monofunctional monomers is preferably from 50 mass% or more, more preferably 50 to 85 mass%.

Specific examples of preferable the fluorine-containing polymer in the invention are shown below. It should be noted that the invention is not restricted to these specific examples.

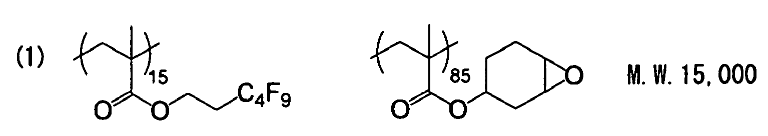

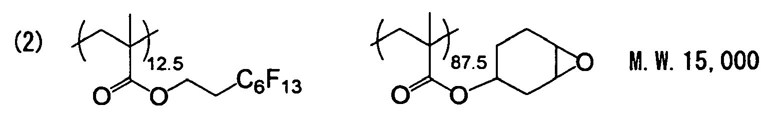

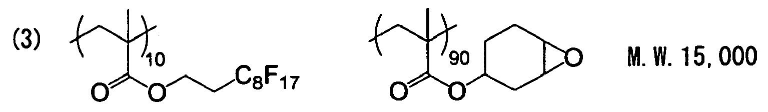

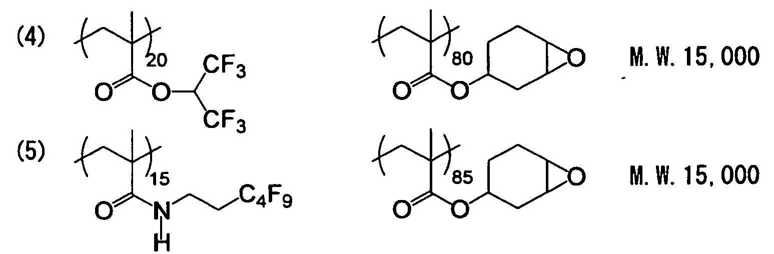

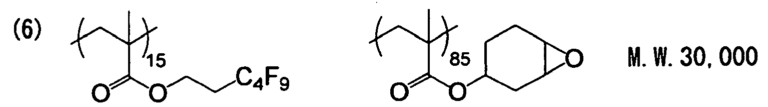

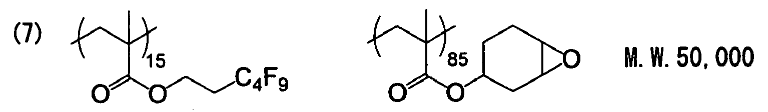

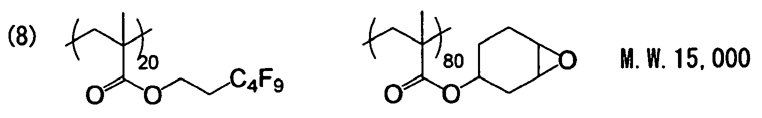

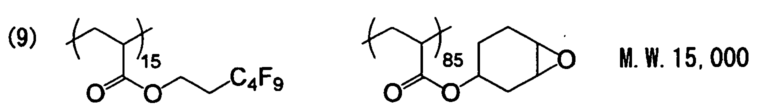

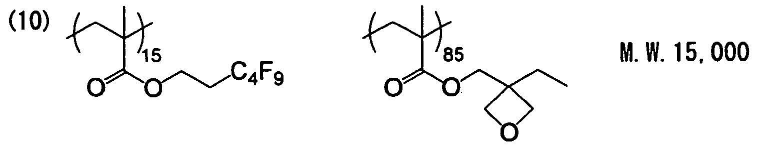

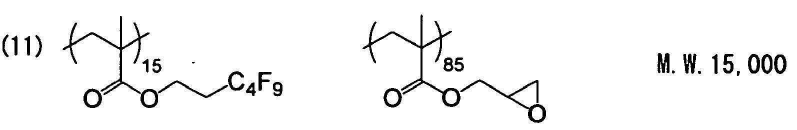

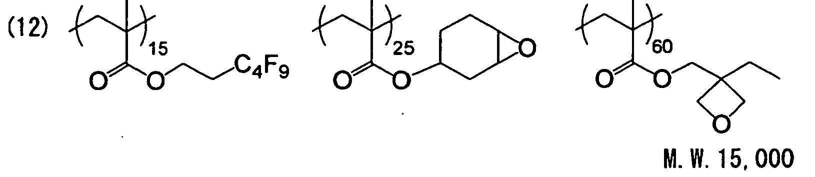

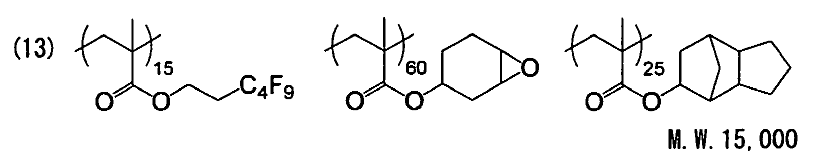

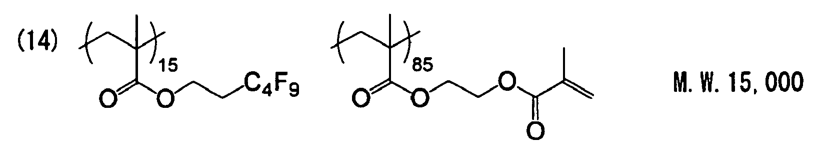

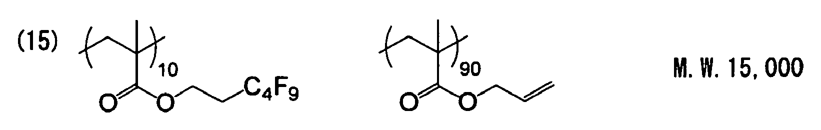

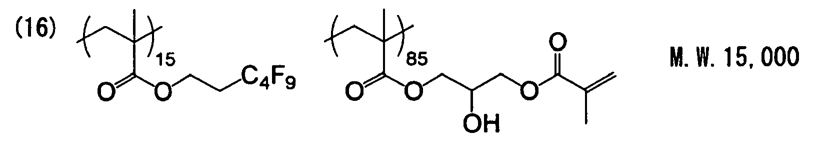

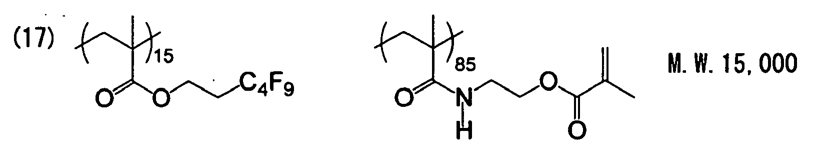

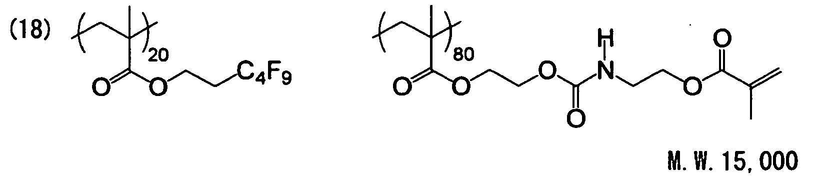

### Polymerizable monomer

The ink composition of the invention is required to contain a polymerizable monomer (polymerizable compound), such as cationically polymerizable compounds and radical polymerizable compounds.

### - Cationic polymerizable compound -

As the cationic polymerizable compound, various well-known cationic polymerizable monomers that have been known as a photo cationic polymerizable monomer may be used. Examples of the cationic polymerizable monomer include the epoxy compounds, the vinylether compounds, and the oxetane compounds described in, for example, Japanese Unexamined Patent Publication No. H06-9714, and Japanese Unexamined Patent Publication Nos. 2001-31892, 2001-40068, 2001-55507, 2001-310938, 2001-310937, and 2001-220526.

The epoxy compounds include aromatic epoxides, alicyclic epoxides, aromatic epoxides, and the like.

The aromatic epoxides are, for example, di- or poly-glycidyl ethers prepared in reaction of a polyvalent phenol having at least one aromatic ring or the alkyleneoxide adduct thereof with epichlorohydrin, and example thereof include di- or poly-glycidyl ethers of bisphenol A or the alkyleneoxide adduct thereof, di- or poly-glycidyl ethers of a hydrogenated bisphenol A or the alkyleneoxide adduct thereof, novolak epoxy resins, and the like. The alkyleneoxide is ethyleneoxide, propyleneoxide, or the like.

referable examples of the alicyclic epoxides include compounds containing cyclohexene oxide or cyclopentene oxide prepared through epoxidation of a compound having at least one cycloalkane ring such as a cyclohexene or cyclopentene ring with an appropriate oxidant such as hydrogen peroxide or peroxy acid. Examples of the aliphatic epoxide include diglycidyl or polyglycidyl ethers of aliphatic polyhydric alcohols or alkylene oxide adducts thereof , and typical examples thereof include diglycidyl ethers of alkylene glycols such as diglycidyl ether of ethylene glycol, diglycidyl ether of propylene glycol, and diglycidyl ether of 1,6-hexanediol, polyglycidyl ethers of polyhydric alcohols such as diglycidyl or triglycidyl ether of glycerol or alkylene oxide adducts thereof, diglycidyl ethers of polyalkylene glycols such as diglycidyl ether of polyethylene glycol or alkylene oxide adducts thereof, and diglycidyl ether of polypropylene glycol or alkylene oxide adducts thereof. Examples of the alkylene oxide include ethylene oxide and propylene oxide.

The monofunctional and polyfunctional epoxy compounds for use in the invention will be described in detail below. Examples of the monofunctional epoxy compounds include phenyl glycidylether, p-tert-butylphenyl glycidylether, butyl glycidylether, 2-ethylhexyl glycidylether, allyl glycidylether, 1,2-butyleneoxide, 1,3-butadienemonooxide, 1,2-epoxydodecane, epichlorohydrin, 1,2-epoxydecane, styreneoxide, cylcohexeneoxide, 3-methacryloyloxymethylcylcohexeneoxide, 3-acryloyloxymethylcylcohexeneoxide, 3-vinylcylcohexeneoxide, and the like. Examples of the multifunctional epoxy compounds include bisphenol A diglycidylether, bisphenol F diglycidylether, bisphenol S diglycidylether, brominated bisphenol A diglycidylether, brominated bisphenol F diglycidylethers, brominated bisphenol S diglycidylether, epoxy novolak resins, hydrogenated bisphenol A diglycidylethers, hydrogenated bisphenol F diglycidylethers, hydrogenated bisphenol S diglycidylethers, 3,4-epoxycyclohexylmethyl-3',4'-epoxycyclohexanecarboxylate, 2-(3,4-epoxycyclohexyl-5,5-spiro-3,4-epoxy)cyclohexane-meta-dioxane, bis(3,4-epoxycyclohexylmethyl) adipate, vinylcylcohexeneoxide, 4-vinylepoxycyclohexane, bis(3,4-epoxy-6-methylcyclohexylmethyl) adipate, 3,4-epoxy-6-methylcyclohexyl-3',4'-epoxy-6'-methylcyclohexanecarboxylate, methylene-bis(3,4-epoxycyclohexane), dicyclopentadiene diepoxide, ethylene glycol di(3,4-epoxycyclohexylmethyl)ether, ethylene bis(3,4-epoxycyclohexanecarboxylate), epoxyhexahydrodioctyl phthalate, epoxyhexahydrodi-2-ethylhexyl phthalate, 1,4-butanediol diglycidylether, 1,6-hexanediol diglycidylether, glycerol triglycidylether, trimethylolpropane triglycidylether, polyethylene glycol diglycidylether, polypropylene glycol diglycidylether, 1,1,3-tetradecadienedioxide, limonenedioxide, 1,2,7,8-diepoxyoctane, 1,2,5,6-diepoxycyclooctane, and the like.

Among these epoxy compounds, aromatic and alicyclic epoxides are preferable from the viewpoint of curing speed, and alicyclic epoxides are particularly preferable.

Examples of the vinyl ether compounds include di- or tri-vinyl ether compounds such as ethylene glycol divinylether, diethylene glycol divinylether, triethylene glycol divinylether, propylene glycol divinylether, dipropylene glycol divinylether, butanediol divinylether, hexanediol divinylether, cyclohexanedimethanol divinylether, and trimethylolpropane trivinylether; monovinylether compounds such as ethyl vinylether, n-butyl vinylether, isobutyl vinylether, octadecyl vinylether, cyclohexyl vinylether, hydroxybutyl vinylether, 2-ethylhexyl vinylether, cyclohexanedimethanol monovinylether, n-propyl vinylether, isopropyl vinylether, isopropenylether-O-propylene carbonate, dodecyl vinylether, diethylene glycol monovinylether, and octadecyl vinylether; and the like.

Hereinafter, the monofunctional and multifunctional vinyl ethers will be described in detail. Examples of the monofunctional vinylethers include methyl vinylether, ethyl vinylether, propyl vinylether, n-butyl vinylether, t-butyl vinylether, 2-ethylhexyl vinylether, n-nonyl vinylether, lauryl vinylether, cyclohexyl vinylether, cyclohexylmethyl vinylether, 4-methylcyclohexylmethyl vinylether, benzyl vinylether, dicyclopentenyl vinylether, 2-dicyclopentenoxyethyl vinylether, methoxyethyl vinylether, ethoxyethyl vinylether, butoxyethyl vinylether, methoxyethoxyethyl vinylether, ethoxyethoxyethyl vinylether, methoxypolyethylene glycol vinylether, tetrahydrofurfuryl vinylether, 2-hydroxyethyl vinylether, 2-hydroxypropyl vinylether, 4-hydroxybutyl vinylether, 4-hydroxymethylcyclohexylmethyl vinylether, diethylene glycol monovinylether, polyethylene glycol vinylether, chloroethyl vinylether, chlorobutyl vinylether, chloroethoxyethyl vinylether, phenylethyl vinylether, phenoxypolyethylene glycol vinylether, and the like.

Examples of the multifunctional vinylethers include divinyl ethers such as ethylene glycol divinylether, diethylene glycol divinylether, polyethylene glycol divinylether, propylene glycol divinylether, butylene glycol divinylether, hexanediol divinylether, bisphenol A alkyleneoxide divinylethers, and bisphenol F alkyleneoxide divinylethers; multifunctional vinyl ethers such as trimethylolethane trivinylether, trimethylolpropane trivinylether, ditrimethyrollpropane tetravinylether, glycerol trivinylether, pentaerythritol tetravinylether, dipentaerythritol pentavinylether, dipentaerythritol hexavinylether, ethyleneoxide adducts of trimethylolpropane trivinylether, propyleneoxide adducts of trimethylolpropane trivinylether, ethyleneoxide adducts of ditrimethyrollpropane tetravinylether, propyleneoxide adducts of ditrimethyrollpropane tetravinylether, ethyleneoxide adducts of pentaerythritol tetravinylether, propyleneoxide adducts of pentaerythritol tetravinylether, ethyleneoxide adducts of dipentaerythritol hexavinylether, and propyleneoxide adducts of dipentaerythritol hexavinylether, and the like.
Examples of the multifunctional vinylethers include divinyl ethers such as ethylene glycol divinylether, diethylene glycol divinylether, polyethylene glycol divinylether, propylene glycol divinylether, butylene glycol divinylether, hexanediol divinylether, bisphenol A alkyleneoxide divinylethers, and bisphenol F alkyleneoxide divinylethers; multifunctional vinyl ethers such as trimethylolethane trivinylether, trimethylolpropane trivinylether, ditrimethyrollpropane tetravinylether, glycerol trivinylether, pentaerythritol tetravinylether, dipentaerythritol pentavinylether, dipentaerythritol hexavinylether, ethyleneoxide adducts of trimethylolpropane trivinylether, propyleneoxide adducts of trimethylolpropane trivinylether, ethyleneoxide adducts of ditrimethyrollpropane tetravinylether, propyleneoxide adducts of ditrimethyrollpropane tetravinylether, ethyleneoxide adducts of pentaerythritol tetravinylether, propyleneoxide adducts of pentaerythritol tetravinylether, ethyleneoxide adducts of dipentaerythritol hexavinylether, and propyleneoxide adducts of dipentaerythritol hexavinylether, and the like. Di- or tri-vinylether compounds are prefereble as the vinyl ether compounds, form the viewpoints of curing efficiency, adhesiveness to recording medium, and the surface hardness of formed image; and divinylether compounds are particularly preferable.

The oxetane compounds which may be used in the invention may be feely selected from known oxetane compounds such as those described in JP-A Nos. 2001-220526, 2001-310937, and 2003-341217. In the invention, the compound having an oxetane ring which may be used in combination with the specific polymerizable compound is preferably a compound having 1 to 4 oxetane rings in the structure thereof. The use of the compound facilitates maintenance of the viscosity of the composition within a range which achieves favorable processability, and, in cases where the composition is used as an ink composition, ensures high adhesiveness between the cured composition and a recording medium.

Examples of the compounds having one or two oxetane rings in the molecule that are used additionally in the invention include the compounds represented by the following formulae (1) to (3), and the like.

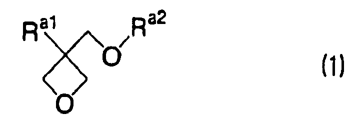

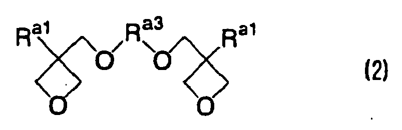

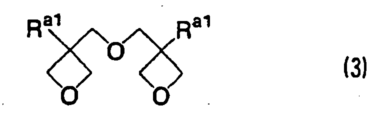

R^{a1} represents a hydrogen atom, an alkyl group having 1 to 6 carbon atoms, a fluoroalkyl group having 1 to 6 carbon atoms, an allyl group, an aryl group, a furyl group, or a thienyl group. In cases where two R^{a1}s are present in the molecule, they may be the same or different from each other. Examples of the alkyl group include a methyl group, an ethyl group, a propyl group, and a butyl group, and any of hydrogen atoms in these alkyl groups may be substituted with a fluorine atom, which are preferable as the fluoroalkyl group. R^{a2} represents a hydrogen atom, an alkyl group having 1 to 6 carbon atoms, an alkenyl group having 2 to 6 carbon atoms, an aromatic ring-containing group, an alkylcarbonyl group having 2 to 6 carbon atoms, an alkoxycarbonyl group having 2 to 6 carbon atoms, and an N-alkylcarbamoyl group having 2 to 6 carbon atoms. Examples of the alkyl group include a methyl group, an ethyl group, a propyl group, and a butyl group. Examples of the alkenyl group include a 1-propenyl group, a 2-propenyl group, a 2-methyl-1-propenyl group, a 2-methyl-2-propenyl group, a 1-butenyl group, a 2-butenyl group, and a 3-butenyl group. Examples of the aromatic ring-containing group include a phenyl group, a benzyl group, a fluorobenzyl group, a methoxybenzyl group, and a phenoxyethyl group. Examples of the alkylcarbonyl group include an ethylcarbonyl group, a propylcarbonyl group, and a butylcarbonyl group. Examples of the alkoxycarbonyl group include an ethoxycarbonyl group, a propoxycarbonyl group, and a butoxycarbonyl group. Examples of the N-alkylcarbamoyl group include an ethylcarbamoyl group, a propylcarbamoyl group, a butylcarbamoyl group, and a pentylcarbamoyl group. R^{a2} may be optionally substituted, and examples of the substituent include an alkyl group having 1 to 6 carbon atoms, and a fluorine atom.

R^{a3} represents a linear or branched alkylene group, a linear, a linear or branched unsaturated hydrocarbon group, a carbonyl group or a carbonyl group-containing alkylene group, a carboxyl group-containing alkylene group, a carbamoyl group-containing alkylene group, or a group shown below. Examples of the alkylene groups include ethylene, propylene, and butylene groups and the like; and examples of the poly(alkyleneoxy) groups include poly(ethyleneoxy) and poly(propyleneoxy) groups and the like. Examples of the unsaturated hydrocarbon groups include propenylene, methylpropenylene, and butenylene groups, and the like.

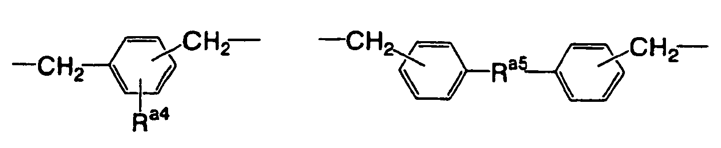

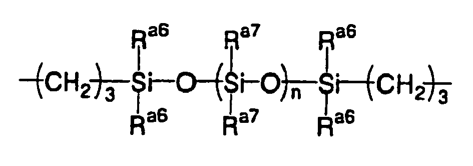

In cases where R^{a3} is one of the above-described polyvalent groups, R^{a4} represents a hydrogen atom, an alkyl group having 1 to 4 carbon atoms, an alkoxy group having 1 to 4 carbon atoms, a halogen atom, a nitro group, a cyano group, a mercapto group, a lower alkyl carboxyl group, a carboxyl group, or a carbamoyl group. R^{a5} represents an oxygen atom, a sulfur atom, a methylene group, NH, SO, SO₂, C(CF₃)₂, or C(CH₃)₂. R^{a6} represents an alkyl group having 1 to 4 carbon atoms, or an aryl group, and n is an integral number of 0 to 2,000. R^{a7} represents an alkyl group having 1 to 4 carbon atoms, an aryl group, or a monovalent group having the structure shown below. In the following formula, R^{a8} represents an alkyl group having 1 to 4 carbon atoms or an aryl group, and m is an integral number of 0 to 100.

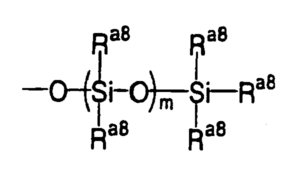

Examples of the compounds represented by the formula (1) include 3-ethyl-3-hydroxymethyloxetane (OXT-101: manufactured by Toagosei Co., Ltd.), 3-ethyl-3-(2-ethylhexyloxymethyl)oxetane (OXT-212: manufactured by Toagosei Co., Ltd.), and 3-ethyl-3-phenoxymethyloxetane (OXT-211: manufactured by Toagosei Co., Ltd.). Examples of the compounds represented by the formula (2) include 1,4-bis[(3-ethyl-3-oxetanylmethoxy)methyl)benzene (OXT-121: Toagosei Co., Ltd. In addition, examples of the compounds represented by the formula (3) include bis(3-ethyl-3-oxetanylmethyl)ether (OXT-221: Toagosei Co., Ltd.).

Examples of the compounds having 3 or 4 oxetane rings include the compounds represented by the following formula (4).

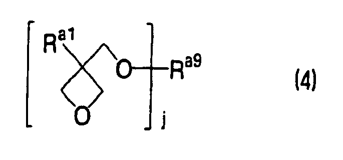

In formula (4), R^{a1} is the same as that in formula (1) above. Examples of the polyvalent connecting group R^{a9} include branched alkylene group having 1 to 12 carbon atoms such as the groups represented by the following groups A to C, branched poly(alkyleneoxy) groups such as the groups represented by the following group D, and branched polysiloxy groups such as the group represented by the following group E, and the like. j is 3 or 4.

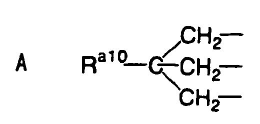

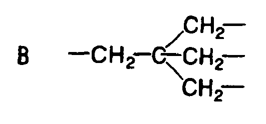

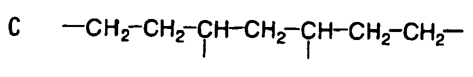

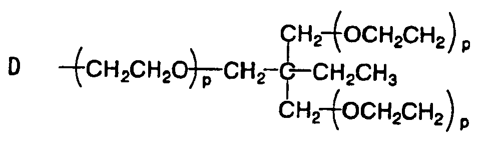

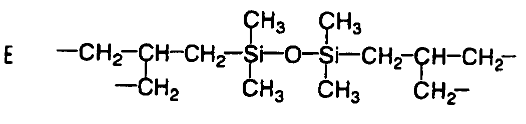

In the group A, R^{a10} represents a methyl, ethyl or propyl group. In the group D, p is an integer of 1 to 10.

Other examples of the oxetane compounds favorably used in the invention include compounds represented by the following formula (5) having oxetane rings on the side chains.

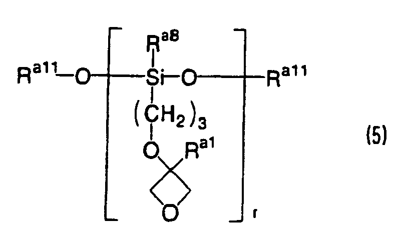

In formula (5), R^{a1} and R^{a8} are the same as that in the above formula. R^{a11} represents an alkyl group having 1 to 4 carbon atoms or a trialkylsilyl group such as a methyl group, an ethyl group, a propyl group, or a butyl group, and r is an integral number of 1 to 4.

The compounds having an oxetane ring are described in detail in JP-A No. 2003-341217, paragraphs (0021) to (0084), and these compounds are favorably used in the invention. The oxetane compound described in JP-A No. 2004-91556 may be used in combination in the invention. The compound is described in detail in JP-A No. 2004-91556, paragraphs (0022) to (0058). Among the other oxetane compounds which may be used in the invention, compounds having one oxetane ring is preferable from the viewpoint of the viscosity and tackiness of the composition.

In case where the cationic polymerizable compound is used in the ink composition of the present invention, the cationic polymerizable compound is preferably contained 60 mass % or more with respect to the total solid content of the ink composition, and more preferably 70 mass % or more. The upper limit of the content of the cationic polymerizable compound is preferably 95 mass % or less. Among the cationic polymerizable compound, containing a cationic polymerizable monofunctional monomer in a range of 50 mass % or is preferable, and 60 mass % or more is more preferable. By containing the cationic polymerizable monofunctional monomer in the above range, the effect of improving the flexibility of cured layer may be exhibited.

### -Radical polymerizable compound-

The radical polymerizable compound which may be used in the ink composition of the invention may be any compound as long as it is a compound which has a radically-polymerizable ethylenically-unsaturated bond and also has at least one radically polymerizable ethylenically unsaturated bond in the molecule. The chemical form of the compound may be a monomer, oligomer, polymer, or the like. Only one radical polymerizable compound may be used, or alternatively two or more radical polymerizable compounds may be used in an arbitrary ratio for the improvement of the target properties. Use of two or more compounds in combination is preferable in view of the control of the reactivity and properties such as physical properties.

Examples of the compounds having a radically-polymerizable ethylenically-unsaturated bond include radical polymerizable compounds such as; unsaturated carboxylic acids such as acrylic acid, methacrylic acid, itaconic acid, crotonic acid, isocrotonic acid and maleic acid and salts thereof, anhydrides having an ethylenically unsaturated group, acrylonitorile, styrene, various types of unsaturated polyesters, unsaturated polyethers, unsaturated polyamides, and unsaturated urethanes.

Specific examples include acrylic acid derivatives such as 2-ethylhexyl acrylate, 2-hydroxyethyl acrylate, butoxyethyl acrylate, carbitol acrylate, cyclohexyl acrylate, tetrahydrofurfuryl acrylate, benzyl acrylate, bis(4-acryloxypolyethoxyphenyl)propane, neopentylglycol diacrylate, 1,6-hexanediol diacrylate, ethyleneglycol diacrylate, diethyleneglycol diacrylate, triethyleneglycoldiacrylate, tetraethyleneglycol diacrylate, polyethyleneglycol diacrylate, polypropyleneglycol diacrylate, pentaerythritol triacrylate, pentaerythritol tetraacrylate, dipentaerythritol tetraacrylate, trimethylolpropane triacrylate, tetramethylolmethane tetraacrylate, oligoester acrylate, N-methylol acrylamide, diacetone acrylamide and epoxyacrylate; methacrylic acid derivatives such as methyl methacrylate, n-butyl methacrylate, 2-ethylhexyl methacrylate, lauryl methacrylate, allyl methacrylate, glycidyl methacrylate, benzyl methacrylate, dimethylaminomethyl methacrylate, 1,6-hexanediol dimethacrylate, ethyleneglycol dimethacrylate, triethyleneglycoldimethacrylate, polyethyleneglycol dimethacrylate, polypropyleneglycol dimethacrylate, trimethylolethane trimethacrylate, trimethylolpropane trimethacrylate, and 2,2-bis(4-methacryloxypolyethoxyphenyl)propane; and allyl compound derivatives such as allyl glycidyl ether, diallyl phthalate and triallyl trimellitate. Further specifically, commercially available or well known in the industry, radically polimerizable or crosslinkable monomers, oligomers and polymers described in "Crosslinking Agent Handbook" editted by Shinzo Yamashita (1981, Taiseisha); "UV·EB Curing Handbook (ingredient part)" edited by Kiyoshi Kato (1985, Koubunshikankoukai); P. 79 in "Application and Market of UV·EB curing technique" edited by RadTech Japan (1989, CMC); "Polyester Resin Handbook" written by Eiichiro Takiyama (1988, The Nikkan Kogyo Shinbun, Ltd.) or the like, may be used.

Examples of known radical polymerizable compounds include photocurable type polymerizable compounds used for the photopolymerizable compositions described in JP-A No. 7-159983, JP-B No. 7-31399 and JP-ANos. 8-224982, 10-863, and 9-134011. These may be applied to the ink composition of the invention.

Use of a vinyl ether compound as the radical polymerizable compound is also preferred. Examples of vinyl ether compounds favorably used include di- or trivinyl ether compounds such as ethylene glycol divinyl ether, ethylene glycol monovinyl ether, diethylene glycol divinyl ether, triethylene glycol monovinyl ether, triethylene glycol divinyl ether, propylene glycol divinyl ether, dipropylene glycol divinyl ether, butanediol divinyl ether, hexanediol divinyl ether, cyclohexanedimethanol divinyl ether, hydroxyethyl monovinyl ether, hydroxynonyl monovinyl ether and trimethylolpropane trivinyl ether; and monovinyl ether compounds such as ethyl vinyl ether, n-butyl vinyl ether, isobutyl vinyl ether, octadecyl vinyl ester, cyclohexyl vinyl ester, hydroxybutyl vinyl ether, 2-ethylhexyl vinyl ether, cyclohexanedimethanol monovinyl ether, n-propyl vinyl ether, isopropyl vinyl ether, isopropenyl ether-O-propylene carbonate, dodecyl vinyl ether, diethylene glycol monovinyl ether and octadecyl vinyl ether. Among such vinyl ether compounds, divinyl ether compounds and trivinyl ether compounds are preferred, and divinyl ether compounds are particularly preferred from the viewpoint of curability, adhesiveness and surface hardness. Vinyl ether compounds may be used either singly or in combination of two or more species thereof selected at will.

In case where the radical polymerizable compound is used in the ink composition of the invention, the radical polymerizable compound is preferably contained 60 mass % or more, and more preferably 70 mass % or more. The upper limit of the content of the radical polymerizable compound is preferably 95 mass % or less.

### (Initiator)

The ink composition of the invention indispensably contains an initiator, and preferably contains a compound which generates an acid by irradiation with a radiation as the initiator. In the invention, the acid generated by irradiation with a radiation induces the above-described polymerizable compound to polymerize to cure.

The initiator usable in the ink composition of the invention may be selected properly from photo initiators for photocationic polymerization, photo initiators for photoradical polymerization, photo-erasing agent for dyes, photo discoloring agents, and compounds generating an acid by irradiation with light used for microresist or the like (for example, ultraviolet light of 400 to 200 nm, far ultraviolet light, most preferably g rays, h rays, i rays, or KrF excimer laser light), ArF excimer laser light, electron beams, X rays, molecular beams, or ion beams.

Examples of the initiators include onium salt compounds such as diazonium salts, phosphonium salts, sulfonium salts and iodonium salts and sulfonate compounds such as imidosulfonates, oxime sulfonates, diazodisulfones, disulfones, and o-nitrobenzyl sulfonates that decompose and generate acid by irradiation with radiation ray, and the like.

Examples of the other compounds (initiators) which generates an acid by irradiation with activated light or a radiation ray used in the invention include: diazonium salts described in S. I. Schlesinger, Photogr. Sci. Eng., 18, 387 (1974), T. S. Bal et al, Polymer, 21, 423 (1980), and others; ammonium salts described in U.S. Patent Nos. 4,069055, 4,069,056, and Re27,992, JP-A No. 3-140140, and others; phosphonium salts described in D. C. Necker et al, Macromolecules, 17, 2468 (1984), C. S. Wen et al, Teh, Proc. Conf. Rad. Curing ASIA, p478, Tokyo, Oct (1988), U.S. Patent Nos. 4,069,055 and 4,069,056, and others; iodonium salts described in J. V. Crivello et al, Macromorecules, 10 (6), 1307 (1977), Chem. & Eng. News, Nov. 28, p. 31 (1988), European Patent Application Nos. 104,143, 339,049, and 410,201, JP-A Nos. 2-150848 and 2-296514, and others;
sulfonium salts described in J. V. Crivello et al, Polymer J. 17, 73 (1985), J. V. Crivello et al. J. Org. Chem., 43, 3055 (1978), W. R. Watt et al, J. Polymer Sci, Polymer Chem. Ed., 22, 1789 (1984), J. V. Crivello et al, Polymer Bull., 14, 279 (1985), J. V. Crivello et al, Macromorecules, 14 (5), 1141 (1981), J. V. Crivello et al, J. Polymer Sci., Polymer Chem. Ed., 17, 2877 (1979), European Patent Application Nos. 370,693, 161,811, 410,201, 339,049, 233,567, 297,443, and 297,442, U.S. Patent Nos. 3,902,114, 4,933,377, 4,760,013, 4,734,444, and 2,833,827, German Patent Nos. 2904,626, 3,604,580, and 3,604,581, JP-A Nos. 7-28237, and 8-27102, and others;
selenonium salts described in J. V. Crivello et al, Macromorecules, 10 (6), 1307 (1977), J. V. Crivello et al, J. Polymer Sci., Polymer Chem. Ed., 17, 1047 (1979), and others; onium salts such as arsonium salts described in C. S. Wen et al, Teh, Proc. Conf. Rad. Curing ASIA, p478, Tokyo, Oct (1988); organic halogen compounds described in U.S. Patent No. 3,905,815, Japanese Patent Application Publication (JP-B) No. 46-4605, JP-A Nos. 48-36281, 55-32070, 60-239736, 61-169835, 61-169837, 62-58241, 62-212401, 63-70243, and 63-298339, and others; organic metals/organic halides described in K. Meier et al, J. Rad. Curing, 13 (4), 26 (1986), T. P. Gill et al, Inorg. Chem., 19, 3007 (1980), D. Astruc, Acc. Chem. Res., 19 (12), 377 (1986), JP-ANo. 2-161445, and others;
photo acid generating agents having an o-nitrobenzyl type protecting group described in S. Hayase et al, J. Polymer Sci., 25, 753 (1987), E. Reichmanis et al, J. Polymer Sci., Polymer Chem. Ed., 23, 1 (1985), Q. Q. Zhu et al, J. Photochem., 36, 85, 39, 317 (1987), B. Amit et al, Tetrahedron Lett., (24) 2205 (1973), D. H. R. Barton et al, J. Chem. Soc., 3571 (1965), P. M. Collins et al, J. Chem. Soc., Perkin I, 1695 (1975), M. Rudinstein et al, Tetrahedron Lett., (17), 1445 (1975), J. W Walker et al, J. Am. Chem. Soc., 110, 7170 (1988), S. C. Busman et al, J. Imaging Technol., 11 (4), 191 (1985), H. M. Houlihan et al, Macormolecules, 21, 2001 (1988), P. M. Collins et al, J. Chem. Soc., Chem. Commun., 532 (1972), S. Hayase et al, Macromolecules, 18, 1799 (1985), E. Reichmanis et al, J. Electrochem. Soc., Solid State Sci. Technokl., 130 (6), F. M. Houlihan et al, Macromolcules, 21, 2001 (1988), European Patent Application Nos. 0290,750, 046,083, 156,535, 271,851, and 0,388,343, U.S. Patent Nos. 3,901,710 and 4,181,531, JP-ANos. 60-198538 and 53-133022, and others;
the sulfone compounds that photodecompose and generate acid such as iminosulfonates described in M. TUNOOKA et al., Polymer Preprints Japan, 35 (8), G. Berner et al., J. Rad. Curing, 13 (4), W. J. Mijs et al., Coating Technol., 55 (697), 45 (1983), Akzo, H. Adachi et al., Polymer Preprints Japan, 37(3), EP Nos. 0199,672, 84515, 044,115, 618,564, and 0101,122, U.S. Patent Nos. 4,371,605 and 4,431,774, JP-A Nos. 64-18143, 2-245756, and 3-140109, and others; the disulfonated compounds described in JP-A Nos. 61-166544 and 2-71270, and others; and the diazoketosulfone and diazodisulfone compounds described in JP-A Nos. 3-103854, 3-103856, and 4-210960 and others.

In addition, compounds having a group generating acid by the light described above or polymers having such a compound in the main chain or on the side, including those described in M. E. Woodhouse et al., J. Am. Chem. Soc., 104, 5586 (1982), S. P. Pappas et al., J. Imaging Sci., 30 (5), 218 (1986), S. Kondo et al., Macromol. Chem., Rapid Commun., 9, 625 (1988), Y Yamada et al., Makromol. Chem., 152, 153, 163 (1972), J. V. Crivello et al., J. Polymer Sci., Polymer Chem. Ed., 17, 3845 (1979), U.S. Patent No. 3,849,137, German Patent No. 3,914,407, JP-A Nos. 63-26653,55-164824, 62-69263, 63-146038, 63-163452, 62-153853, and 63-146029, and others, may also be used. Examples thereof include onium salts such as diazonium salts, ammonium salts, phosphonium salts, iodonium salts, sulfonium salts, selenonium salts, and arsonium salts; organic halogen compounds, organic metals/organic halides, o-nitrobenzyl protecting group-containing photo acid generating agents, sulfone compounds that generates acid by photochemical decomposition such as iminosulfonates, disulfonated compounds, diazoketosulfones, and diazodisulfone compounds.

Other examples include compounds generating an acid by light described in V. N. R. Pillai, Synthesis, (1), 1 (1980), A. Abad et al, Tetrahedron Lett., (47) 4555 (1971), D. H. R. Barton et al, J. Chem. Soc., (C), 329 (1970), U.S. Patent No. 3,779,778, and European Patent Application No. 126,712 and the like.

Favorable examples of the photo acid generating agents for use in the invention include the compounds represented by the following formulae (b1), (b2), and (b3).

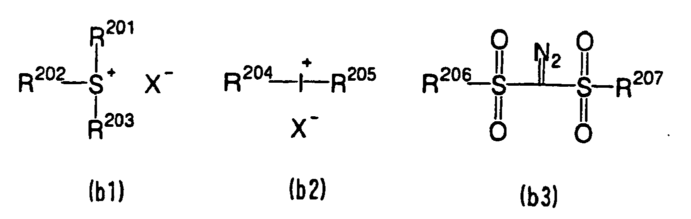

In formula (b1), R²⁰¹, R²⁰², and R²⁰³ each independently represent an organic group. X⁻ represents a non-nucleophilic anion, and is preferably a sulfonate anion, carboxylate anion, bis(alkylsulfonyl)amide anion, tris(alkylsulfonyl)methide anion, BF₄⁻, PF₆⁻, SbF₆⁻, or a group shown below, and is preferably an organic anion having carbon atoms.

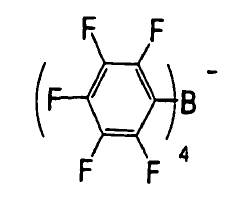

Preferable examples of the organic anion include the following organic anions.

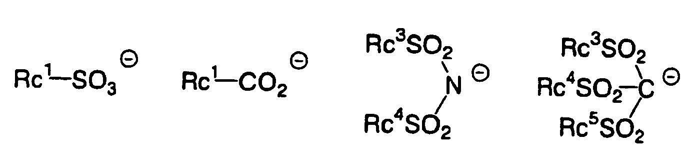

R^{c1} represents an organic group. Examples of the organic group represented by R^{c1} include those having 1 to 30 carbon atoms, and preferable examples thereof include an alkyl group, a cycloalkyl group, an aryl group, and combinations thereof linked through a single bond or a linking group such as -O-, -CO₂-, -S-, -SO₃-, or -SO₂N(Rd¹)-.

Rd¹ represents a hydrogen atom or an alkyl group. Rc³, Rc⁴, and Rc⁵ each independently represent an organic group. The organic group of Rc³, Rc⁴, or Rc⁵ is preferably the same as the organic group favorable as Rc¹ and particularly preferably a perfluoroalkyl group having 1 to 4 carbon atoms.

Each of the organic groups represented by R^{c1}, and R^{c3} to R^{c5} is most preferably an alkyl group substituted with a fluorine atom or fluoroalkyl group at the 1 position, or a phenyl group substituted with a fluorine atom or a fluoroalkyl group. Through the fluorine atom or fluoroalkyl group increases the acidity of the acid generated by photoirradiation, thereby improving the sensitivity.

The organic groups of R²⁰¹, R²⁰², and R²⁰³ usually have 1 to 30 carbon atoms, and preferably 1 to 20 carbon atoms. Two of R²⁰¹ to R²⁰³ may be linked together to form a ring structure, and the ring may contain an oxygen atom, a sulfur atom, an ester bond, an amide bond, or a carbonyl group. Examples of the group formed by linkage between two of R²⁰¹ to R²⁰³ include an alkylene group (for example, a butylene group, and a pentylene group).

Specific examples of the organic groups of R²⁰¹, R²⁰², and R²⁰³ include the corresponding groups in the below-described compounds (b1-1), (b1-2), and (b1-3).

The compound may contain a plurality of the structure represented by formula (b1). For example, at least one of R²⁰¹ to R²⁰³ of the compound represented by formula (b1) may be bonded to at least one of R²⁰¹ to R²⁰³ of another compound represented by formula (b1) directly or through a linking group.

Preferable examples of the (b 1) component include the compounds (b1-1), (b1-2), and (b1-3) described below.

The compound (b1-1) is an arylsulfonium compound in which at least one of R²⁰¹ to R²⁰³ of formula (b1) is an aryl group, that is, a compound in which the cation thereof is an aryl sulfonium.

In the arylsulfonium compound, all of R²⁰¹ to R²⁰³ may be an aryl group, or a part of R²⁰¹ to R²⁰³ may be an aryl group, with the remainder being an alkyl group or a cycloalkyl group.

Examples of the arylsulfonium compounds include triarylsulfonium compounds, diarylalkylsulfonium compounds, aryldialkylsulfonium compounds, diarylcycloalkylsulfonium compounds, aryldicycloalkylsulfonium compounds, and the like.

The aryl group in the arylsulfonium compounds is preferably an aryl group such as phenyl or naphthyl, or a heteroaryl group such as indole or pyrrole, and more preferably a phenyl or indole residue. When the arylsulfonium compound has two or more aryl groups, the two or more aryl groups may be the same as or different from each other.

The alkyl group that the arylsulfonium compound may have as needed is preferably a linear or branched alkyl group having 1 to 15 carbons, and examples thereof include methyl, ethyl, propyl, n-butyl, sec-butyl, and t-butyl groups and the like. The cycloalkyl group that the arylsulfonium compound may have as needed is preferably a cycloalkyl group having 3 to 15 carbons, and examples thereof include cyclopropyl, cyclobutyl, and cyclohexyl groups, and the like.

The aryl group, alkyl group, and cycloalkyl group of R²⁰¹ to R²⁰³ may each have an alkyl group (for example, one having 1 to 15 carbon atoms), a cycloalkyl group (for example, one having 3 to 15 carbon atoms), an aryl group (for example, one having 6 to 14 carbon atoms), an alkoxy group (for example, one having 1 to 15 carbon atoms), a halogen atom, a hydroxyl group, or a phenylthio group as a substituent. As the substituent, a linear or branched alkyl group having 1 to 12 carbon atoms, a cycloalkyl group having 3 to 12 carbon atoms, and a linear, branched, or cyclic alkoxy group having 1 to 12 carbon atoms are preferable, and an alkyl group having 1 to 4 carbon atoms, and an alkoxy group having 1 to 4 carbon atoms are most preferable. The substituent may replace any one of R²⁰¹ to R²⁰³, or all of R²⁰¹ to R²⁰³. Also, in cases where R²⁰¹ to R²⁰³ are an aryl group, it is preferable that the substituent replace the p-position of the aryl group.

Hereinafter, the compound (bl-2) will be described.
The compound (b1-2) is a compound represented by the formula (b1), wherein R²⁰¹ to R²⁰³ each independently represent a non-aromatic ring-containing organic group. The aromatic rings include aromatic rings containing a heteroatom. The non-aromatic ring-containing organic group of R²⁰¹ to R²⁰³ generally has 1 to 30 carbon atoms and preferably 1 to 20 carbon atoms. R²⁰¹ to R²⁰³ each independently, preferably represent an alkyl, cycloalkyl, allyl, or vinyl group, more preferably a linear, branched, or cyclic 2-oxoalkyl group or an alkoxycarbonylmethyl group, and particularly preferably a linear or branched 2-oxoalkyl group.

The alkyl group of R²⁰¹ to R²⁰³ may be linear or branched, and is preferably a linear or branched alkyl group having 1 to 10 carbon atoms (for example, a methyl group, an ethyl group, a propyl group, a butyl group, and a pentyl group), and more preferably a linear or branched 2-oxoalkyl group, or a linear or branched alkoxycarbonylmethyl group.

The cycloalkyl group of R²⁰¹ to R²⁰³ is preferably a cycloalkyl group having 3 to 10 carbon atoms (for example, a cyclopentyl group, a cyclohexyl group, and a norbornyl group), and more preferably a cyclic 2-oxoalkyl group.

The linear, branched, or cyclic 2-oxoalkyl group of R²⁰¹ to R²⁰³ is preferably a group having >C=O at the 2-position of the above-described alkyl group or cycloalkyl group. The alkoxy group in the alkoxycarbonylmethyl group of R²⁰¹ to R²⁰³ is preferably an alkoxy group having 1 to 5 carbon atoms (for example, a methoxy group, an ethoxy group, a propoxy group, a butoxy group, and a pentoxy group). R²⁰¹ to R²⁰³ may be further substituted with a halogen atom, an alkoxy group (for example, one having 1 to 5 carbon atoms), a hydroxy group, a cyano group, or a nitro group.

The compound (b1-3) is a compound represented by the following formula (b1-3), i.e., a compound having a phenacyl sulfonium salt structure.

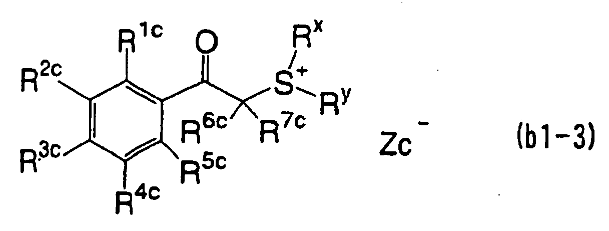

In formula (b1-3), R^{1c} to R^{5c} each independently represent a hydrogen atom, an alkyl group, a cycloalkyl group, an alkoxy group, or a halogen atom. R^{6c} and R^{7c} each independently represent a hydrogen atom, an alkyl group, or a cycloalkyl group. R^{x} and R^{y} each independently represent an alkyl group, a cycloalkyl group, an allyl group, or a vinyl group. Any two or more of R^{1c} to R^{5c}, R^{6c} and R^{7c}, and R^{x} and R^{y} may be respectively linked together to form a ring structure. Zc⁻ represents a non-nucleophilic anion, and may be the same as the non-nucleophilic anion of X⁻ in formula (b1).

The alkyl group of R¹c to R^{7c} may be a straight-chain or branching group, and examples thereof include linear or branched alkyl groups having 1 to 20 carbon atoms, preferably having 1 to 12 carbon atoms, (e.g., methyl, ethyl, linear or branched propyl, linear or branched butyl, and linear or branched pentyl).

The cycloalkyl group of R^{1c} to R^{7c} is preferably a cycloalkyl group having 3 to 8 carbon atoms (for example, a cyclopentyl group, and a cyclohexyl group).

The alkoxy group of R^{1c} to R^{5c} may be a straight-chain, branched, or cyclic group, and examples thereof include alkoxy groups having 1 to 10 carbons, preferably, straight-chain and branched alkoxy groups having 1 to 5 carbons (e.g., methoxy, ethoxy, straight-chain or branched propoxy, straight-chain or branched butoxy, and straight-chain or branched pentoxy groups), and cyclic alkoxy groups having 3 to 8 carbons (e.g., cyclopentyloxy and cyclohexyloxy groups).

Examples of the groups formed by binding of any two or more of R^{1c} to R^{5c}, R^{6c} and ^{7c}, or R^{x} and R^{y} include butylene and pentylene groups and the like. The ring structure may contain an oxygen or sulfur atom or an ester or amide bond.

Preferably, part of the R^{1c} to R^{5c} are linear or branched alkyl groups, cycloalkyl groups, or linear, branched, or cyclic alkoxy groups; and more preferably, the total number of carbons in groups R^{1c} to R^{5c} is 2 to 15. Under such a condition, the acid generator is more soluble in solvent, suppressing generation of particles during storage.

The alkyl group or cycloalkyl group of R^{x} and R^{y} may be the same as the alkyl group or cycloalkyl group of R^{1c} to R^{7c}. R^{x} and R^{y} are preferably a 2-oxoalkyl group or an alkoxycarbonylmethyl group. The 2-oxoalkyl group may be a group having >C=O at the 2-position of the alkyl group or cycloalkyl group of R^{1c} to R^{5c}. The alkoxy group in the alkoxycarbonylmethyl group may be the same as the alkoxy group ofR^{1c} to R^{5c}.

R^{x} and R^{y} are each preferably an alkyl group or cycloalkyl group having 4 or more carbon atoms, and more preferably an alkyl group or cycloalkyl group having 6 or more carbon atoms, and further preferably an alkyl group or cycloalkyl group having 8 or more carbon atoms.

In formulae (b2) and (b3), R²⁰⁴ to R²⁰⁷ each independently represent an aryl group, an alkyl group, or a cycloalkyl group. X⁻ represents a non-nucleophilic anion, and may be the same as the non-nucleophilic anion as X⁻ in formula (b1).

The aryl group of R²⁰⁴ to R²⁰⁷ is preferably a phenyl or naphthyl group and more preferably a phenyl group. The alkyl group of R²⁰⁴ to R²⁰⁷ may be a linear or branched group, and is preferably, for example, a linear or branched alkyl group having 1 to 10 carbons (e.g., methyl, ethyl, propyl, butyl, or pentyl). The cycloalkyl group of R²⁰⁴ to R²⁰⁷ is preferably, for example, a cycloalkyl group having 3 to 10 carbons (e.g., cyclopentyl, cyclohexyl, or norbornyl). Examples of the substituent groups that R²⁰⁴ to R²⁰⁷ may have include alkyl groups (e.g., those having 1 to 15 carbon atoms), cycloalkyl groups (e.g., those having 3 to 15 carbon atoms), aryl groups (e.g., those having 6 to 15 carbon atoms), alkoxy groups (e.g., those having 1 to 15 carbon atoms), halogen atoms, a hydroxyl group, a phenylthio group, and the like.

Other usable examples of the compounds that generates acid by irradiation of activated light or radiation ray include the compounds represented by the following formulae (b4), (b5), and (b6).

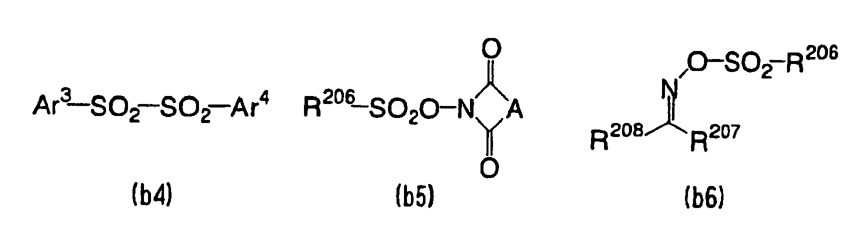

In formulae (b4) to (b6), Ar³ and Ar⁴ each independently represent an aryl group. R²⁰⁶, R²⁰⁷ and R²⁰⁸ each independently represent an alkyl, cycloalkyl or aryl group. A represents an alkylene, alkenylene or arylene group.

Among the initiators above, preferable are the compounds represented by the formulae (b1) to (b3) and the like. Favorable examples of the initiators for use in the invention (b), (b-1) to (b-96), will be listed below, but the invention is not restricted by these examples.

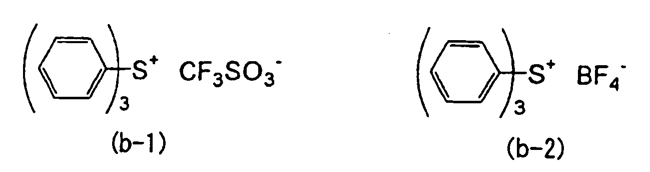

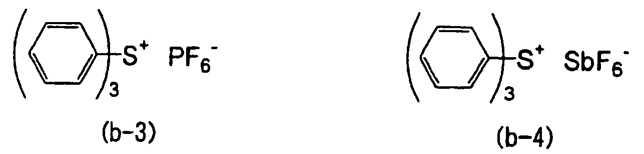

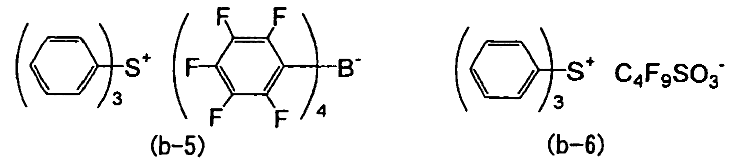

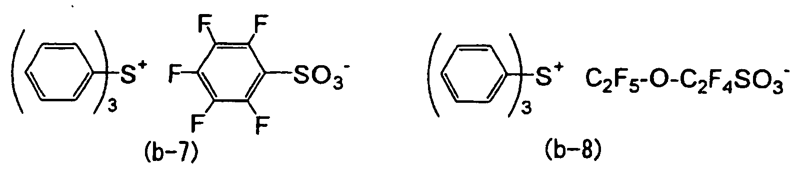

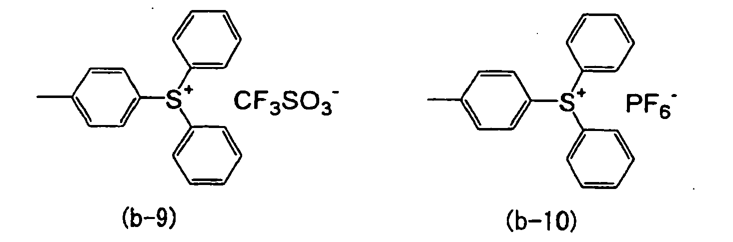

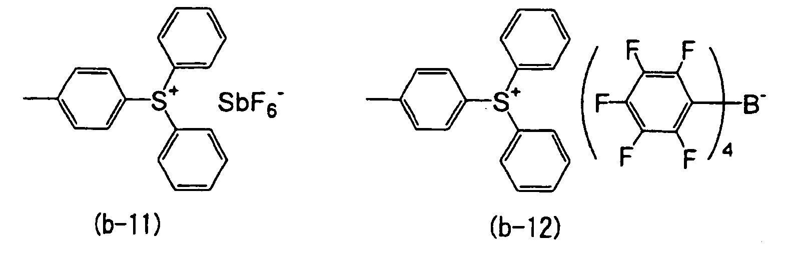

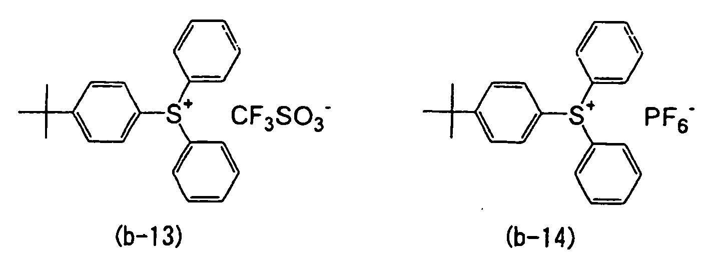

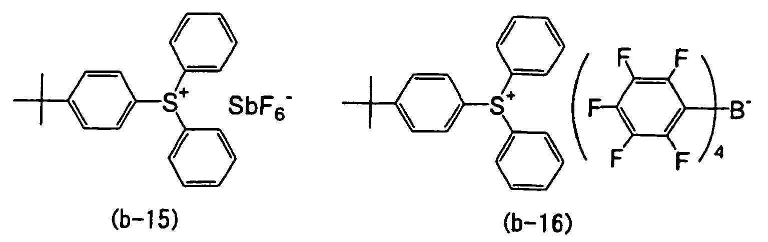

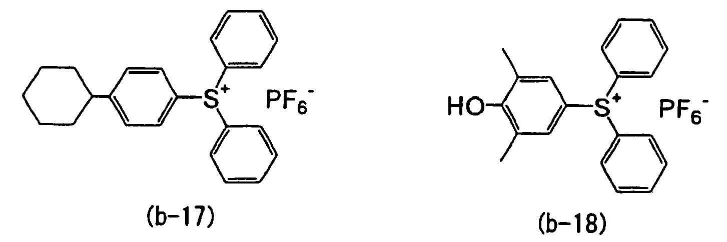

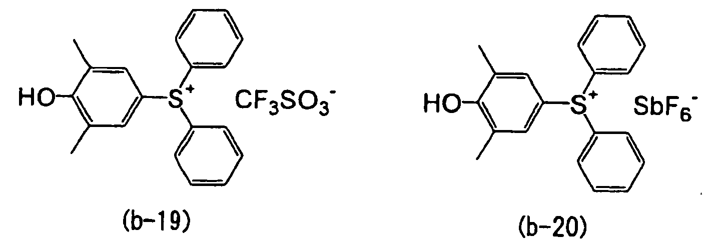

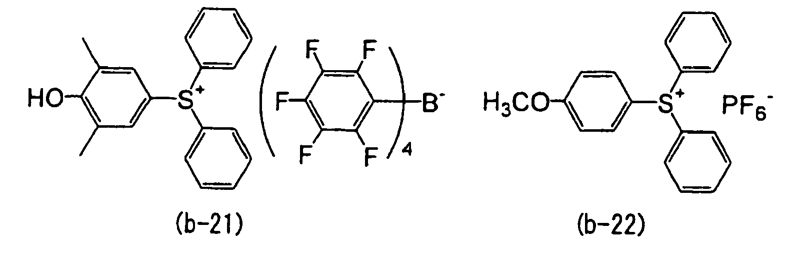

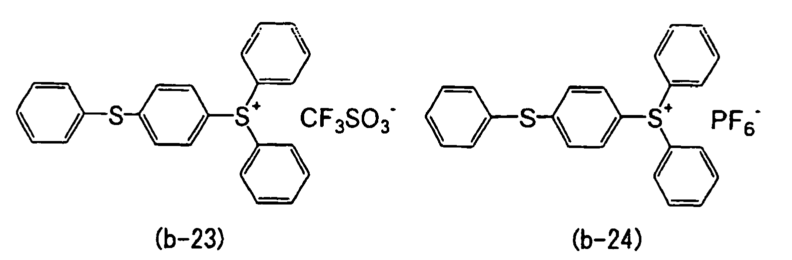

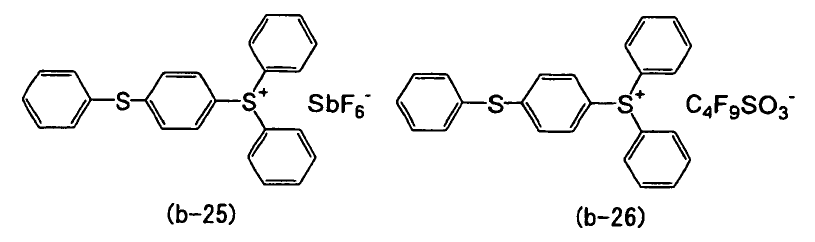

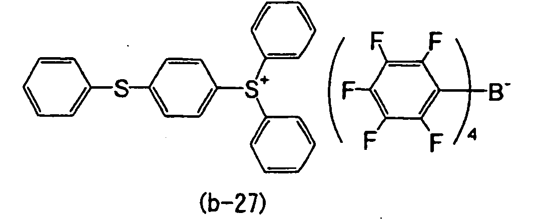

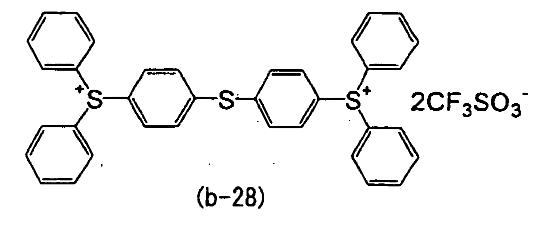

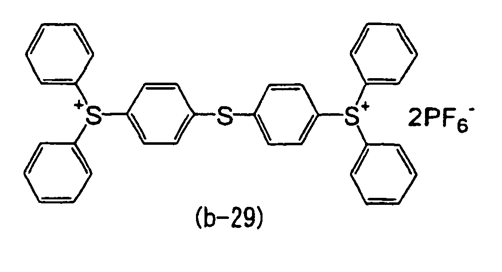

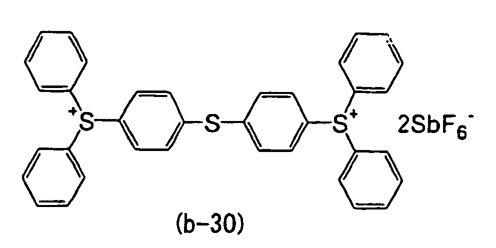

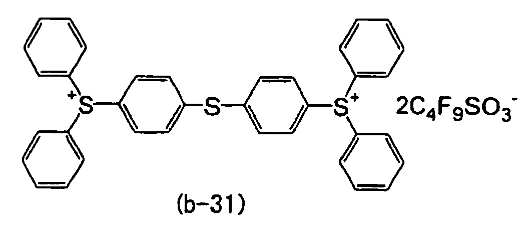

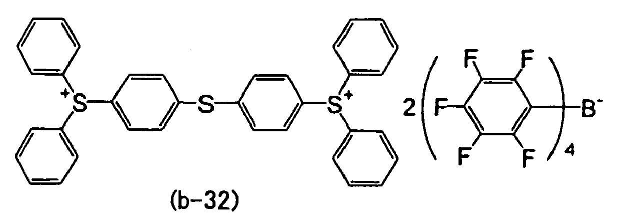

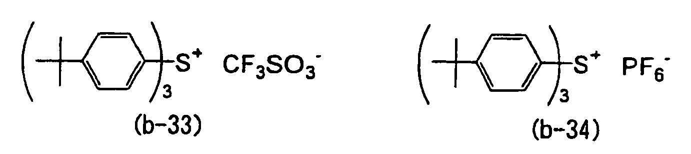

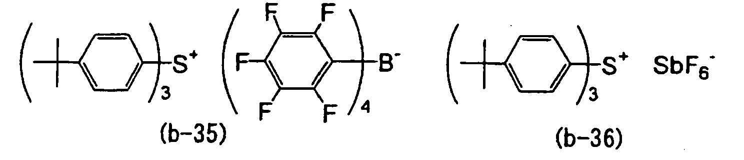

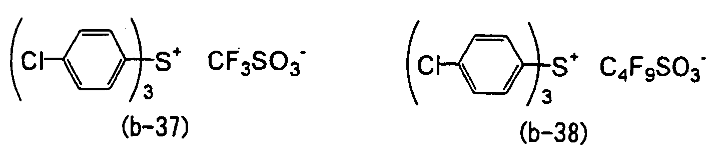

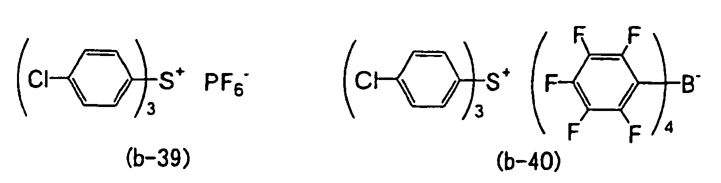

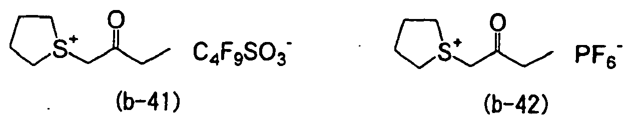

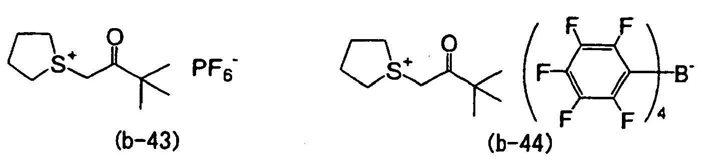

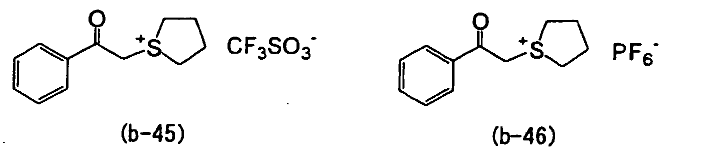

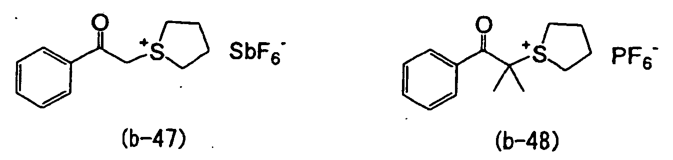

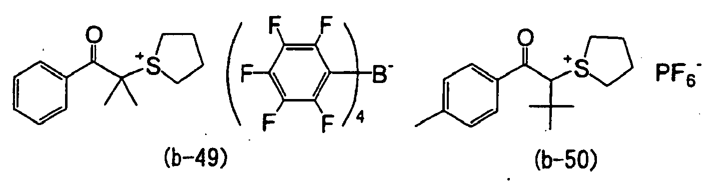

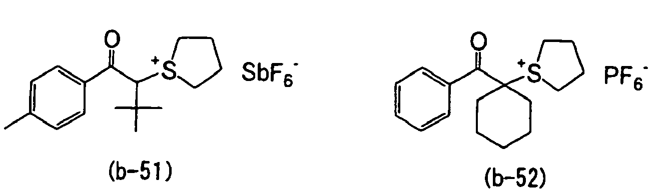

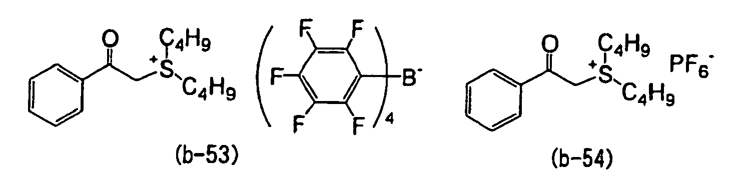

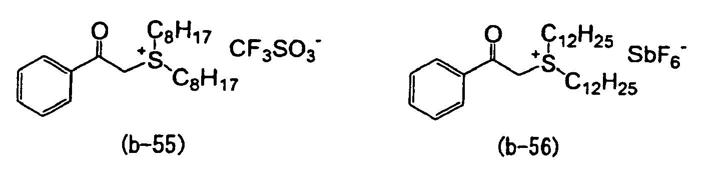

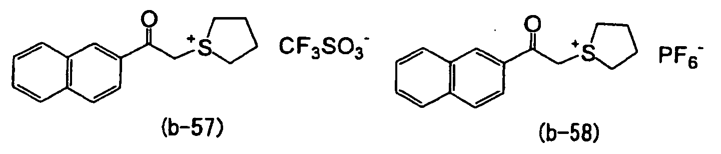

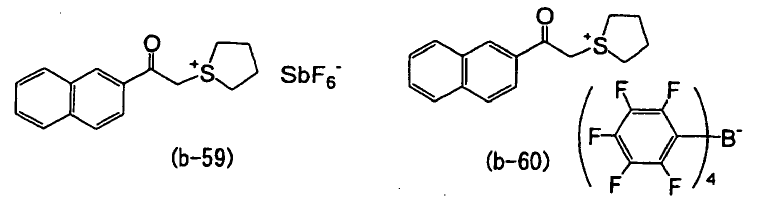

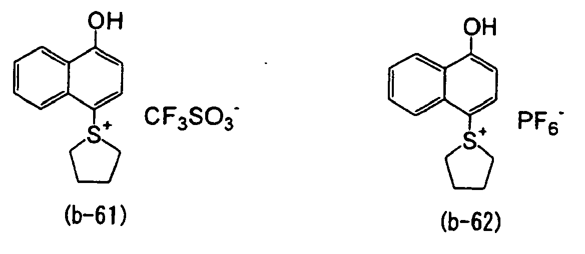

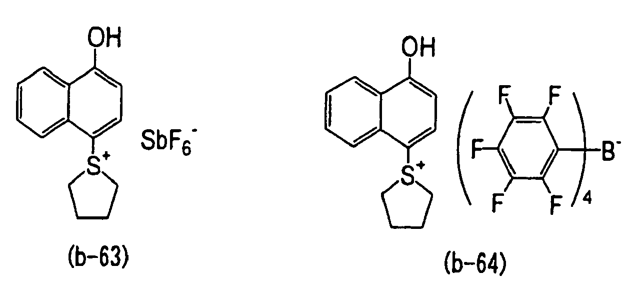

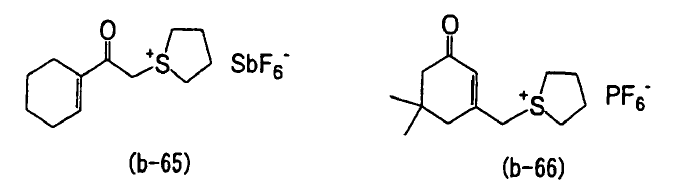

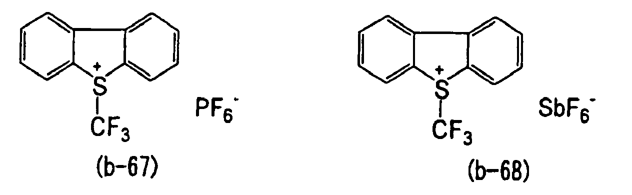

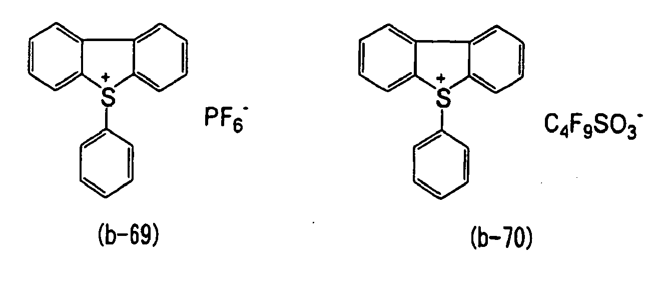

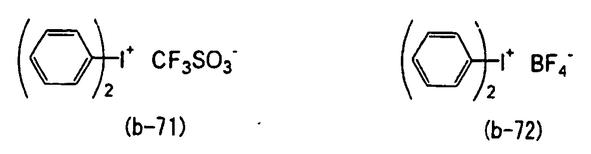

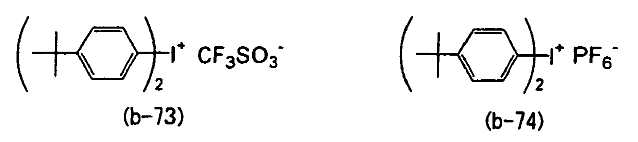

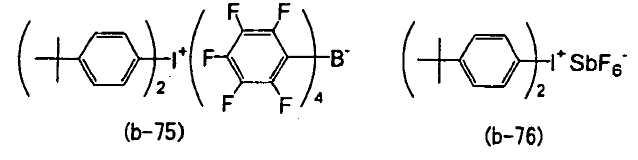

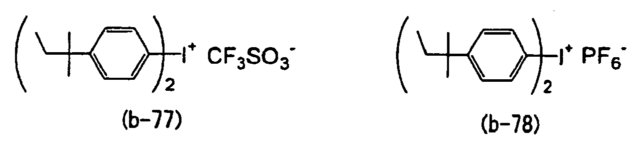

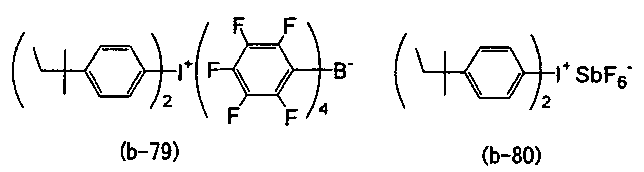

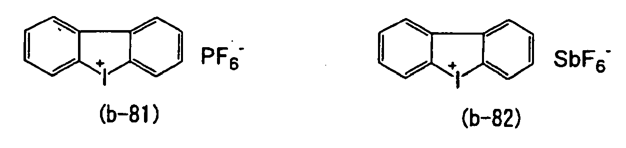

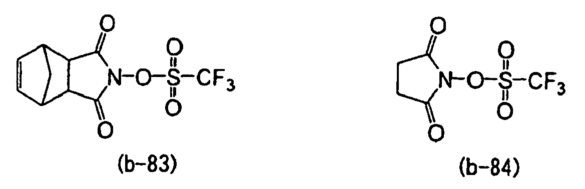

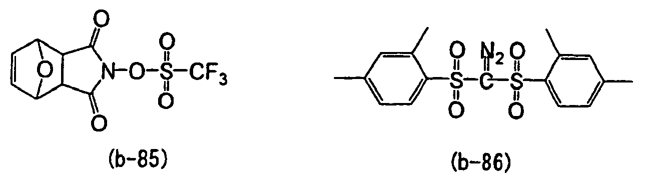

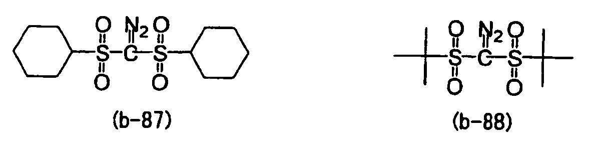

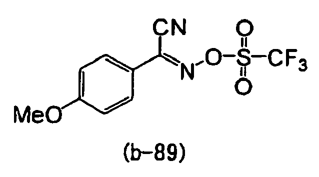

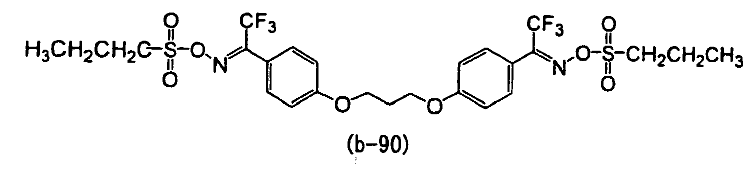

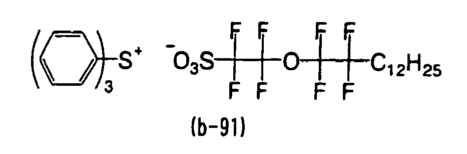

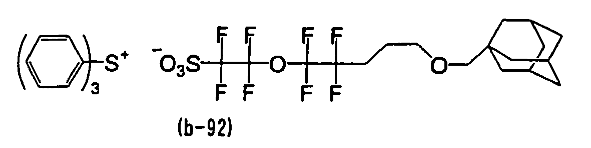

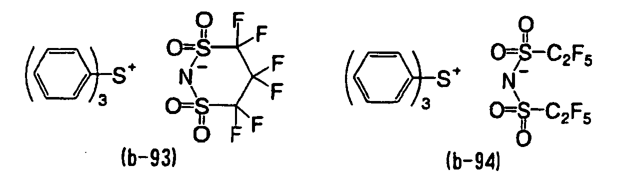

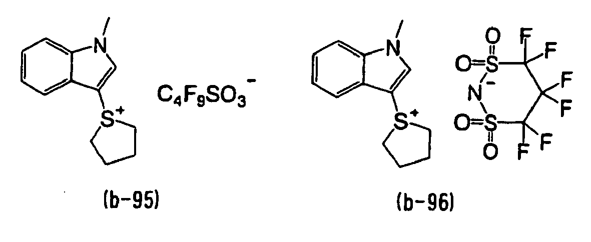

In addition, the oxazole derivatives, s-triazine derivatives and the like described in JP-A No. 2002-122994, paragraph Nos. (0029) to (0030), may also be used favorably. (0171) Further, the onium salt and sulfonate compounds exemplified in JP-A No. 2002-122994, paragraph Nos. (0037) to (0063), may also be used favorably.

Examples of initiators which may be applied to the invention include compounds which have heretofore been known as radical polymerization initiators such as acetophenone derivatives, benzophenone derivatives, benzyl derivatives, benzoin derivatives, benzoin ether derivatives, benzyldialkyl ketal derivative, thioxanthone derivatives, acylphosphine oxide derivative, metal complexes, p-dialkylaminobenzoic acid, azo compounds, peroxide compounds. Among these, acetophenone derivatives, benzyl derivatives, benzoin ether derivatives, benzyldialkyl ketal derivatives, thioxanthone derivatives and acylphosphine oxide derivatives are preferred, and acetophenone derivatives, benzoin ether derivatives, benzyldialkyl ketal derivatives and acylphosphine oxide derivatives are more preferre.

Specific examples of the initiator include acetophenone, 2,2-diethoxyacetophenone, p-dimethylaminoacetophenone, p-dimethylaminopropiophenone, benzophenone, p,p'-dichlorobenzophenone, p,p'-bisdiethylaminobenzophenone, Michler's ketone, benzyl, benzoin, benzoin methyl ether, benzoin isopropyl ether, benzoin-n-propyl ether, benzoin isobutyl ether, benzyldimethyl ketal, 1-hydroxy-cyclohexyl phenyl ketone, tetramethylthiuram monosulfide, thioxanthone, 2-chlorothioxanthone, 2,4-dimethylthioxanthone, 2,2-dimethylpropioyldiphenylphosphine oxide, 2-methyl-2-ethylhexanoyldiphenylphosphine oxide, 2,6-dimethylbenzoyldiphenylphosphine oxide,
2,6-dimethoxybenzoyldiphenylphosphine oxide, 2,4,6-trimethylbenzoyldiphenylphosphine oxide, bis(2,6-dimethoxybenzoyl)-2,4,4-trimethylpentylphosphine oxide, 2,3,6-trimethylbenzoyldiphenylphosphine oxide,
bis(2,3,6-trimethylbenzoyl)-phenylphosphine oxide,
2,4,6-trimethoxybenzoyldiphenylphosphine oxide, 2,4,6-trichlorobenzoyldiphenylphosphine oxide, 2,4,6-trimethylbenzoylnaphthyl phosphonate, bis
(η5-2,4-cyclopentadien-1-yl)-bis(2,6-difluoro-3-(1H-pyrrol-1-yl)-phenyl)titanium,
p-dimethylaminobenzoic acid, p-diethylaminobenzoic acid, azobisisobutyronitrile, 1,1'-azobis(1-acetoxy-1-phenylethane), benzoin peroxide and di-tert-butyl peroxide.

Other examples of the initiator include photopolymerization initiators described in Kiyomi Kato, "Shigaisen Koka System (Ultraviolet Curing System)," pp. 65 to 148, Sogo Gijutsu Center (1989). Such photopolymerization initiators may be used singly or in combination of two or more species thereof. The photopolymerization initiator may also be used in combination with a sensitizer, which is be described below.

The photopolymerization initiator is preferably one which does not thermally decompose at temperetures up to 80°C. Use of an initiator which thermally decomposes at temperatures of 80°C or lower is undesirable because of problems with respect to storage of products.

The initiator may be used alone or in combination of two or more of them. The content of the p initiator in the ink composition according to the invention is preferably 0.1 to 20 mass %, more preferably 0.5 to 10 mass %, and further preferably 1 to 7 mass % in terms of the total solid content of the composition.

### (Coloring agent)

The ink composition according to the invention preferably contains a coloring agent for producing a colored image. The coloring agent useful in the invention is not particularly limited, but is preferably a pigment or an oil soluble dye having excellent weather resistance and color reproducibility, and may be optionally selected from known coloring agents such as solubility dyes. The coloring agent suitable to the ink composition according to the invention preferably does not function as a polymerization inhibitor in the polymerization reaction for curing. This is to prevent the decrease in the sensitivity of the curing reaction by active radiation.

### <Pigment>

The pigment is not particularly limited, and any one of common commercially available pigments, including organic and inorganic pigments, dispersions of the pigment dispersed in an insoluble resin, and pigments surface-grafted with a resin, may be used. In addition, dyed resin particles may also be used. Such pigments include the pigments described, for example, in Seijiro Itoh Ed., "Ganryo no Jiten (Dictionary of Pigments)" (2000), W. Herbst K. Hunger, Industrial Organic Pigments", and JP-A Nos. 2002-12607, 2002-188025, 2003-26978, and 2003-342503.

Specific Examples of the organic and inorganic pigments exhibiting yellow color employable in the invention include monoazo pigments such as C.I. Pigment Yellow 1 (Fast Yellow G, etc.) and C.I. Pigment Yellow 74, disazo pigments such as C.I. Pigment Yellow 12 (Disazo Yellow AAA, etc.) and C.I. Pigment Yellow 17, non-benzidine azo pigments such as C.I. Pigment Yellow 180, azolake pigments such as C.I. Pigment Yellow 100 (tartrazine yellow lake, etc.), condensation azo pigments such as C.I. Pigment Yellow 95 (condensation azo yellow GR, etc.), acidic dye lake pigments such as C.I. Pigment Yellow 115 (quinoline yellow lake, etc.), basic dye lake pigments such as C.I. Pigment Yellow 18 (thioflavin lake, etc.), anthraquinone pigments such as fravantrone yellow (Y-24), isoindolinone pigments such as isoindolinone yellow 3RLT (Y-110), quinophtharone pigments such as quinophtharone yellow (Y-138), isoindoline pigments such as isoindoline yellow (Y-139), nitroso pigments such as C.I. Pigment Yellow 153 (nickel nitroso yellow, etc.), metal complex salt azomethine pigments such as C.I. Pigment Yellow 117 (copper azomethine yellow, etc.), and the like.

Examples thereof exhibiting red or magenta color include monoazo pigments such as C.I. Pigment Red 3 (toluidine red, etc.), disazo pigments such as C.I. pigment red 38 (pyrazolone red B, etc.), azolake pigments such as C.I. Pigment Red 53:1 (lake red C, etc.) and C.I. Pigment Red 57:1 (Brilliant Carmine 6B), condensation azo pigments such as C.I. Pigment Red 144 (condensation azo red BR, etc.), acidic dye lake pigments such as C.I. Pigment Red 174 (phloxine B lake, etc.), basic dye lake pigments such as C.I. Pigment Red 81 (rhodamine 6G' lake, etc.), anthraquinone pigments such as C.I. Pigment Red 177 (dianthraquinonyl red, etc.), thioindigo pigments such as C.I. Pigment Red 88 (Thioindigo Bordeaux, etc.), perynone pigments such as C.I. Pigment Red 194 (perynone red, etc.), perylene pigments such as C.I. pigment red 149 (perylene scarlet, etc.), quinacridone pigments such as C.I. Pigment Violet 19 (unsubstituted quinacridone) and C.I. Pigment Red 122 (quinacridone magenta, etc.), isoindolinone pigments such as C.I. Pigment Red 180 (isoindolinone red 2BLT, etc.), alizarin lake pigments such as C.I. Pigment Red 83 (madder lake, etc.), and the like.

Examples thereof exhibiting blue or cyan color include disazo pigments such as C.I. Pigment Blue 25 (dianisidine blue, etc.), phthalocyanine pigments such as C.I. Pigment Blue 15 (phthalocyanine blue, etc.), acidic dye lake pigments such as C.I. Pigment Blue 24 (peacock blue lake, etc.), basic dye lake pigments such as C.I. Pigment Blue 1 (Victria Pure Blue BO lake, etc.), anthraquinone pigments such as C.I. Pigment Blue 60 (indanthron blue, etc.), alkali blue pigments such as C.I. Pigment Blue 18 (alkali Blue V-5: 1), and the like.

Examples of the pigment exhibiting green color include phthalocyanine pigments such as C.I. Pigment Green 7 (phthalocyanine green) and C.I. Pigment Green 36 (phthalocyanine green), and azometal complex pigments such as C.I. Pigment Green 8 (nitroso green). Examples of the pigment exhibiting orange color include isoindoline-based pigments such as C.I. Pigment Orange 66 (isoindoline orange), and anthraquinone-based pigments such as C.I. Pigment Orange 51 (dichloropyranthrone orange).

Examples of the pigment exhibiting black color carbon black, titanium black, and aniline black. Specific examples of the white pigments include basic lead carbonate (2PbCO₃Pb(OH)₂, so-called silver white), zinc oxide (ZnO, so-called zinc white), titanium oxide (TiO₂, so-called titanium white), and strontium titanate (SrTiO₃, so-called titanium strontium white).

Titanium oxide has a lower density and a higher refractive index than other white pigments, is more stable chemically or physically, and thus, has a greater masking and coloring potentials as a pigment, and is excellent in resistance to acid or alkali and other environmental factors. Thus, use of titanium oxide as the white pigment is preferable. Other white pigments (including white pigments other than those described above) may be used as needed.

For dispersing the pigment, any one of dispersing machines, such as ball mill, sand mill, attriter, roll mill, jet mill, homogenizer, paint shaker, kneader, agitator, Henschel mixer, colloid mill, ultrasonic wave homogenizer, pearl mill, and wet jet mill, may be used. It is also possible to add a dispersant during dispersion of the pigment. Examples of the dispersants include hydroxyl group-containing carboxylic acid esters, salts of a long-chain polyaminoamide with a high-molecular weight acid ester, high-molecular weight polycarboxylic acid salts, high-molecular weight unsaturated acid esters, high-molecular weight copolymers, modified polyacrylates, polyvalent aliphatic carboxylic acids, naphthalenesulfonic acid/formalin condensates, polyoxyethylene alkylphosphoric esters, pigment derivatives, and the like. Use of a commercially available polymer dispersant such as a Solsperse series product manufactured by Zeneca is also preferable. A dispersion aid suitable for the pigment may be used as a dispersion aid. The dispersant and dispersion aid are preferably added in an amount of 1 to 50 parts by mass with respect to 100 parts by mass of the pigment.

A solvent may be added as the dispersion medium for various components such as pigment in the ink composition or alternatively, the cationic polymerizable compound above, which is a low-molecular weight component, may be used without solvent; but, the ink composition according to the invention preferably contains no solvent, because the composition is a radiation-curing ink that is hardened after application on a recording medium. It is because the solvent remaining in the hardened ink image leads to deterioration in solvent resistance and causes a problem of VOC (Volatile Organic Compound). From the viewpoints above, the cation polymerizable compound is preferably used as the dispersion medium, and selection of a cation polymerizable monomer lowest in viscosity among them is preferable for improvement in dispersibility and processability of the ink composition.

The average diameter of the pigment is preferably in the range of 0.02 to 0.4 µm, more preferably 0.02 to 0.1 µm, and still more preferably 0.02 to 0.07 µm. The pigment, the dispersant, and dispersion medium are selected and the dispersion and filtration conditions are determined in such a manner that the average diameter of the pigment particles falls in the preferable range above. Control of particle diameter enables prevention of the clogging in head nozzles and preservation of the storage stability, transparency and curing efficiency of ink.

### <Dye>

The dye for use in the invention is preferably an oil soluble dye. Specifically, the dye preferably has a solubility in water (mass of the colorant dissolved in 100 g of water) of 1 g or less at 25°C, preferably 0.5 g or less, and more preferably 0.1 g or less. Accordingly, so-called water-insoluble and oil soluble dyes are used favorably.

As for the dyes for use in the invention, it is preferable to introduce an oil-solubilizing group on the basic dye structure described above, to ensure that the dye is dissolved in the amount needed in the ink composition. Examples of the oil-solubilizing groups include long-chain branched alkyl groups, long-chain branched alkoxy groups, long-chain branched alkylthio groups, long-chain branched alkylsulfonyl groups, long-chain branched acyloxy groups, long-chain branched alkoxycarbonyl groups, long-chain branched acyl groups, long-chain branched acylamino groups, branched alkylsulfonylamino groups, long-chain branched alkylaminosulfonyl groups, as well as aryl, aryloxy, aryloxycarbonyl, arylcarbonyloxy, arylaminocarbonyl, arylaminosulfonyl, and arylsulfonylamino groups containing these long-chain branched substituent groups, and the like. Alternatively, it is also possible to introduce an oil-solubilizing group, such as alkoxycarbonyl, aryloxycarbonyl, alkylaminosulfonyl or arylaminosulfonyl, on water-soluble dyes containing carboxylic acid or sulfonic acid groups, by using a long-chain branched alcohol, amine, phenol, or aniline derivative.

The melting point of the oil soluble dye is preferably 200°C or lower, more preferably 150°C or lower, and further preferably 100°C or lower. Through the use of an oil soluble dye having a low melting point, crystallization of the dye in the ink composition is suppressed, which improves the storage stability of the ink composition. The dye preferably has an higher oxidation potential for achieving higher resistance to fading in particular caused by oxidizers such as ozone, and better curing properties. Accordingly, the oxidation potential of the oil soluble dye used in the invention is preferably 1.0 V (vs SCE) or higher, more preferably 1.1 V (vs SCE) or higher, and particularly preferably 1.15 V (vs SCE) or higher.

The yellow dyes having the structure represented by the formula (Y-1) described in JP-A 2004-250483 are preferable. Example of the dyes particularly preferable include the dyes represented by the formulae (Y-II) to (Y-IV) in JP-A No. 2004-250483, paragraph No. (0034), and typical examples thereof include the compounds described in JP-A No. 2004-250483, paragraph Nos. (0060) to (0071). The oil soluble dyes represented by the formula (Y-I) described therein may be used not only in yellow ink, but also in inks in any other colors such as black and red.

The compounds having the structures represented by the formulae (3) and (4) in JP-A No. 2002-114930 are preferable as the magenta dyes; and typical examples thereof include the compounds described in JP-A No. 2002-114930, paragraph Nos. (0054) to (0073). Particularly preferable dyes are the azo dyes represented by the formulae (M-1) to (M-2) in JP-A No. 2002-121414, paragraph Nos. (0084) to (0122), and typical examples thereof include the compounds described in JP-A No. 2002-121414, paragraph Nos. (0123) to (0132). The oil soluble dyes represented by the formulae (3), (4), and (M-1) to (M-2) may be used not only in magenta ink, but also in inks in any other colors such as black and red inks.

Examples of the cyan dyes include the dyes represented by the formulae (I) to (IV) described in JP-A No. 2001-181547, and the formulae (IV-1) to (IV-4) described in JP-A No. 2002-121414, paragraph Nos. (0063) to (0078), and specific examples thereof include the compounds described in JP-A No. 2001-181547, paragraph Nos. (0052) to (0066), and JP-A No. 2002-121414, paragraph Nos.(0079) to (0081). Examples of the particularly preferable dyes include the phthalocyanine dyes represented by the formulae (C-I) and (C-II) described in JP-A No. 2002-121414, paragraph Nos. (0133) to (0196), and the phthalocyanine dye represented by the formula (C-II) is even further preferable. Specific examples thereof include the compounds described in JP-ANo. 2002-12141, paragraph Nos. (0198) to (0201). The oil soluble dyes represented by the formulae (I) to (IV), (IV-1) to (IV-4), (C-I), and (C-II) are applicable to any color other than cyan, such as black ink and green ink.

These coloring agents are preferably added to the ink composition in an amount of 1 to 20 mass %, more preferably 2 to 10 mass % as solid matter.

### (Other components)

Various additives which may added as needed to the ink composition according to the invention are described below.

### <Ultraviolet absorbent>

An ultraviolet absorbent may be added to the ink composition according to the invention, for improvement in weather fastness and prevention of discoloration of the image obtained. Examples of the ultraviolet absorbents include the benzotriazole compounds described in JP-ANos. 58-185677, 61-190537, 2-782, 5-197075 and 9-34057 and others; the benzophenone compounds described in JP-A Nos. 46-2784 and 5-194483, U.S. Patent No. 3214463, and others; the cinnamic acid compounds described in JP-B Nos. 48-30492 and 56-21141, JP-ANo. 10-88106, and others; the triazine compounds described in JP-ANos. 4-298503, 8-53427, 8-239368, 10-182621, and 8-501291, and others; the compounds described in Research Disclosure No. 24239; compounds emitting light by absorbing ultraviolet ray such as stilbene and benzoxazole compounds; so-called fluorescent brighteners; and the like. The addition amount may be decided suitably according to applications, but is generally, approximately 0.5to 15 mass % as solid matter.

### <Sensitizer>

In the invention, a sensitizer may be added for the purposes of improving the efficiency of acid generation by the photo acid generating agent, and extending the photosensitive wavelength of the agent. The sensitizer may be any sensitizer which sensitizes the photo acid generating agent through an electron transfer mechanism or an energy transfer mechanism. Preferable examples thereof include fused polycyclic aromatic compounds such as anthracene, 9,10-dialkoxyanthracene, pyrene, and perylene, aromatic ketone compounds such as acetophenone, benzophenone, thioxanthone, and Michler ketone, and heterocyclic compounds such as phenothiazine and N-aryloxazolidinone. The addition amount is selected properly according to applications, but, and more preferably 0.1 to 0.5 mole % with respect to the photo acid generating agent.

### <Antioxidant>

An antioxidant may be added according to the invention, for improvement of stability of the ink composition. Examples of the antioxidants include those described in EP Laid-Open Nos. 223739, 309401, 309402, 310551, 310552, and 459416, German Patent Laid-Open No. 3435443, JP-ANos. 54-48535, 62-262047, 63-113536, 63-163351, 2-262654, 2-71262, 3-121449, 5-61166, and 5-119449, U.S. Patent Nos. 4814262 and 4980275, and others. The addition amount is decided properly according to applications, but generally, approximately 0.1 to 8 mass % as solid matter.

### <Antifading agent>

Various types of organic antifading agents and metal complex antifading agents may be used according to the invention. Examples of the organic antifading agents include hydroquinones, alkoxy phenols, dialkoxy phenols, phenols, anilines, amines, indanes, chromanes, alkoxy anilines, and heterocycles. Examples of the metal complex antifading agents include nickel complexes and zinc complexes. Specific examples thereof include the compounds described in patents cited in Research Disclosure No. 17643, VII, Sections I to J, Research Disclosure No. 15162, Research Disclosure No. 18716, p. 650 left column, Research Disclosure No. 36544, p. 527, Research Disclosure No. 307105, p. 872, and Research Disclosure No. 15162, and the compounds included in the formula of typical compounds and compound examples described in JP-A No. 62-215272, pp. 127-137. The addition amount is selected properly according to applications, but preferably 0.1 to 8 mass % as solid matter.

### <Conductive salt>

A conductive salt such as potassium thiocyanate, lithium nitrate,ammonium thiocyanate, and dimethylamine hydrochloride may be added according to the invention, for the purpose of controlling the ejection properties.

### <Solvent>

Addition of an extremely trace amount of organic solvent to the ink composition according to the invention is effective for improvement in adhesiveness to the recording medium. Examples of the solvents include ketone solvents such as acetone, methylethylketone, and diethylketone; alcohol solvents such as methanol, ethanol, 2-propanol, 1-propanol, 1-butanol, and tert-butanol; chlorine-based solvents such as chloroform, and methylene chloride; aromatic solvents such as benzene and toluene; ester solvents such as ethyl acetate, butyl acetate, and isopropyl acetate; ether solvents such as diethylether, tetrahydrofuran, and dioxane; glycol ether solvents such as ethylene glycol monomethyl ether and ethylene glycol dimethyl ether; and the like. In such a case, the amount of the solvent added is in the range that does not cause problems of solvent resistance and VOC, and thus, preferably in the range of 0.1 to 5 mass %, more preferably 0.1 to 3 mass %, in the entire ink composition.

### <Polymer compound>

Various types of polymer compounds may be added according to the invention for the purpose of controlling the physical properties of the film formed by curing.
Examples of the polymer compounds include acrylic polymers, polyvinylbutyral resins, polyurethane resins, polyamide resins, polyester resins, epoxy resins, phenol resins, polycarbonate resins, polyvinylbutyral resins, polyvinylformal resins, shellac, vinyl resins, acrylic resins, rubber resin, waxes, other natural resins, and the like. These resins may be used in combination of two or more. Among them, vinyl copolymers obtained by copolymerization with an acrylic monomeric are preferable. In addition, copolymers containing a "carboxyl group-containing monomer", an "alkyl methacrylate ester", or an "alkyl acrylate ester" as the structural unit as a copolymerization component are also used favorably for the polymer binding material.

### <Surfactant>

Surfactants may be added in the ink composition of the invention. The surfactants include those described in JP-A Nos. 62-173463 and 62-183457. Examples thereof include anionic surfactants such as dialkylsulfoscuccinic acid salts, alkylnaphthalenesulfonic acid salts, and fatty acid salts; nonionic surfactants such as polyoxyethylene alkylethers, polyoxyethylene alkylallylethers, acetylene glycol, and polyoxyethylene-polyoxypropylene block copolymers; cationic surfactants such as alkylamine salts and quaternary ammonium salts; and the like. An organic fluorocompound may be used instead of the surfactant. The organic fluorocompound is preferably hydrophobic. Examples of the organic fluorocompounds include fluorochemical surfactants, oily fluorochemical compounds (e.g., fluorine oil) and solid fluorochemical compound resins (e.g., tetraethylenefluoride resin); and typical examples thereof include those described in JP-B No. 57-9053 (Columns 8 to 17) and JP-A No. 62-135826.

In addition, a leveling additive, a matting agent, a wax for adjustment of film physical properties, or a tackifier for improvement of the adhesiveness to the recording medium such as of polyolefin and PET that does not inhibit polymerization may be added as needed to the ink composition according to the invention. Typical examples of the tackifiers include the high-molecular weight adhesive polymers described in JP-A 2001-49200, pp. 5 to 6 (e.g., copolymers of a (meth)acrylic ester and an alcohol with an alkyl group having 1 to 20 carbons, of a (meth)acrylic ester and an alicyclic alcohol having 3 to 14 carbons, and of a (meth)acrylic ester and an aromatic alcohol having 6 to 14 carbons), and low-molecular weight adhesive resin containing a polymerizable unsaturated bond, and the like.

### (Preferred property of ink composition)

In cases where the ink composition according to the invention is used as an inkjet recording ink, in consideration of the ejection properties, the viscosity is preferably 7 to 30 mPa·s, and more preferably 7 to 20 mPa·s at the temperature during ejection (for example 40 to 80°C, preferably 25 to 30°C). For example, the viscosity of the ink composition according to the invention at room temperature (25 to 30°C) is preferably 35 to 500 mPa·s, and more preferably 35 to 200 mPa·s. The composition ratio of the ink composition according to the invention is preferably adjusted properly in such a manner that the viscosity falls within the above-described range. When the composition is highly viscous at room temperature, ink penetration into a recording medium is avoided even if the recording medium is porous, which allows to reduce the amount of uncured monomers and odors. Further, bleeding of the landed ink droplets is reduced, which results in the improvement of image quality.

The surface tension of the ink composition according to the invention is preferably 20 to 30 mN/m, and more preferably 23 to 28 mN/m. When the ink composition according to the invention is used on various recording media such as polyolefin, PET, coated paper, and non-coated paper, the surface tension thereof is preferably 20 mN/m or more for prevention of ink bleeding and penetration, and 30 mN/m or less for improvement in wettability therewith.

The ink composition according to the invention is favorably used as an inkjet recording ink. In cases where the composition is used as an inkjet recording ink, the ink composition is ejected on a recording medium using an inkjet printer, thereafter the ejected ink composition is cured by irradiation with a radiation for recording.

Since the image portion is cured by irradiation of the radiation such as ultraviolet rays, and the image portion has an excellent strength, the printed material obtained by the ink composition may be used for various usages such as formation of an ink receiving layer (image portion) of a planographic printing plate, in addition to image formation by the ink.

### [Inkjet recording method and printed material]

The inkjet recording method to which the ink composition according to the invention is favorably applied (the inkjet recording method according to the invention) is further described below. The inkjet recording method according to the invention comprises: ejecting the ink composition according to the invention onto a recording medium (for example, a support or a recording material) using an inkjet recording apparatus, and then curing the ink composition by irradiating the ejected ink composition with active radiation. The cured ink composition forms an image on the recording medium.

The recording medium applicable to the inkjet recording method according to the invention is not particularly limited, and examples thereof include papers such as ordinary uncoated paper and coated paper, various unabsorbent resin materials and films thereof used for so-called soft packaging. Examples of the various plastic films include a PET film, an OPS film, an OPP film, an ONy film, a PVC film, a PE film, and a TAC film. Other examples of the plastics useful as the recording medium material include, polycarbonate, acrylic resins, ABS, polyacetal, PVA, and rubbers. Metals and glasses are also useful as the recording medium. The ink composition according to the invention undergoes less heat shrinkage during curing, and provides excellent adhesiveness to the base material (recording medium). Therefore, the ink composition has the advantage in its capability to form a high definition image even on a film tends to be curled or deformed by curing shrinkage of the ink, or by heat generated during curing reaction of the ink, for example, thermally shrinkable films, a PET film, an OPS film, an OPP film, an ONy film, and a PVC film. In addition, another examples of the recording material applicable to the invention include the support of the below-described planographic printing plate.

Examples of the active radiation applicable to the inkjet recording method according to the invention include α rays, γ rays, X rays, ultraviolet light, visible light, infrared light, and electron beams. The peak wavelength of the active radiation is preferably 200 to 600 nm, more preferably 300 to 450 nm, and further preferably 350 to 420 nm. The power of the active radiation is preferably 2,000 mJ/cm² or less, more preferably 10 to 2,000 mJ/cm², further preferably 20 to 1,000 mJ/cm², and most preferably 50 to 800 mJ/cm². In particular, according to the inkjet recording method according to the invention, the radiation ray is preferably emitted from a light emitting diode which emits ultraviolet light having a emission peak wavelength of 350 to 420 nm and achieving a maximum illumination intensity of 10 to 1,000 mW/cm² on the surface of the above-described recording medium.

In addition to the above conditions and the like, the conditions applied to an inkjet recording method of the invention and the details of an inkjet recording apparatus will be described below in a planographic printing plate and a method of producing a planographic printing plate of the invention that are preferred applications of the inkjet recording method of the invention.

In the inkjet recording method of the invention, since the aforementioned ink composition of the invention is used and the ink composition is cured by irradiation with active radiation rays, images being excellent in rubbing resistance and having controlled surface stickiness may be formed. Although it is possible to conduct the irradiation with active radiation rays after ejection of all colors, it is preferable to conduct exposure after ejection of each color in view of the acceleration of curing.

The printed material of the invention is a product containing an image formed from the ink composition of the invention by the inkjet recording method described above (namely, the inkjet recording method of the invention). It therefore is a printed material which has an image being excellent in rubbing resistance and having controlled surface stickiness.

### [Planographic printing plate and method for producing planographic printing plate]

The method for producing a planographic printing plate according to the invention is a method for producing a planographic printing plate comprising: ejecting the ink composition according to the invention onto a support, and then curing the ejected ink composition by irradiation of active radiation so as to form a hydrophobic image. The planographic printing plate according to the invention is also a planographic printing plate prepared according to the method of producing a planographic printing plate according to the invention, which has a support and a hydrophobic image formed on the support.

Heretofore, as a planographic printing plate, a so-called PS plate composed of a hydrophilic support having thereon an lipophilic photosensitive resin layer has been widely used. In a method for producing this PS plate, normally, after a mask exposure (surface exposure) is carried out via a lith film, non-exposed areas are dissolved and removed to give a desired printing plate. However, in recent years, a technique of digitizing image information using a computer by electronically processing, storing, and outputting the information has become widespread, and a new image output system that can be used for the above technique has been desired. In particular, a computer to plate (CTP) technique in which a printing plate is directly produced by scanning according to digitized image information with highly coherent light such as laser light without using a lith film has been developed.

As a system for obtaining a planographic printing plate that makes possible the above scanning exposure, a method for directly producing a planographic printing plate using an ink composition can be cited. This method comprises ejecting an ink onto a support (preferably a hydrophilic support) using an inkjet system or the like, and exposing areas having the ink composition or the inkjet recording ink to active radiation to give a printing plate having a desired image (preferably a hydrophobic image). The ink composition suitable for such a system is the ink composition or the inkjet recording ink according to invention.
(The step ejecting the ink composition according to the invention on the surface of the support)

### <Support>

The support (recording medium) for the planographic printing plate according to the invention is not particularly limited, if it is a dimensionally rigid plate-shaped support. The support is preferably a hydrophilic support. Examples thereof include papers, papers laminated with a plastic material (e.g., polyethylene, polypropylene, or polystyrene), metal plates (e.g., plates of aluminum, zinc, and copper), plastic films (e.g., films of cellulose diacetate, cellulose triacetate, cellulose propionate, cellulose butyrate, cellulose acetate butyrate, cellulose nitrate, polyethylene terephthalate, polyethylene, polystyrene, polypropylene, polycarbonate, and polyvinylacetal), papers or plastic films having a laminated or vapor-deposited layer of the metal described above, and the like. Preferable supports are, for example, polyester films and aluminum plates. Among them, aluminum plates, which are dimensionally stable and relatively cheaper, are preferable.

The aluminum plate is a pure aluminum plate, an alloy plate containing aluminum as a main component and a small amount of a different element, or a thin film of aluminum or an aluminum alloy laminated with a plastic. Examples of the different element contained in the aluminum alloy include silicon, iron, manganese, copper, magnesium, chromium, zinc, bismuth, nickel, and titanium. The content of the different element in the alloy is preferably 10 mass % or less. In the invention, a pure aluminum plate is preferable, but since the production of completely pure aluminum is difficult with the currently available refining technique, aluminum containing a slight amount of foreign elements may be used. The aluminum plate is not specified as to its composition, and may be selected properly from known materials. The thickness of the support is preferably 0.1 to 0.6 mm, and more preferably 0.15 to 0.4 mm.

In advance of using the aluminum plate, the aluminum plate is preferably subjected to surface treatment such as surface-roughening treatment and anodizing treatment. The surface treatment facilitate enhancing hydrophilicity and ensuring adhesion between the image recording layer and the support. Before surface-roughening the aluminum plate, if desired, degreasing treatment for removing the rolling oil on the surface is performed using a surfactant, an organic solvent, an alkaline aqueous solution or the like.

Various methods may be used for surface roughening of aluminum plate, and examples thereof include mechanical surface-roughening treatment, electrochemical surface-roughening treatment (surface-roughening by dissolving the surface electrochemically), and chemical surface-roughening treatment (surface-roughening by dissolving the surface chemically). Any one of the methods known in the art such as ball polishing, brushing, blast polishing, and buffing may be used as the method of mechanical surface-roughening. Alternatively, a transfer method of transferring surface irregularity with a surface-irregular roll during hot rolling of aluminum may be used. The electrochemical surface-roughening may be performed, for example, by applying an alternate or direct current to the support in an electrolyte solution containing an acid such as hydrochloric acid or nitric acid. Yet alternatively, the method of using a mixed acid described in JP-A No. 54-63902 may also be used. The aluminum plate after surface-roughening treatment may be etched as needed by using an aqueous solution, for example, of potassium hydroxide or sodium hydroxide, and further after neutralization, treated as needed in an anodizing process for improvement in abrasion resistance.

Various electrolytes forming a porous oxide film may be used as the electrolytes for use in the process of anodizing aluminum plate. Sulfuric acid, hydrochloric acid, oxalic acid, chromic acid, or a mixed acid thereof is used commonly. The concentration of the electrolyte is determined properly according to the kind of electrolyte. The condition of the anodizing process varies according to the electrolyte used, and thus is not specified particularly; but generally, the electrolyte concentration is 1 to 80 mass %; liquid temperature, 5 to 70°C; electric current density, 5 to 60 A/dm²; voltage, 1 to 100 V; and electrolysis period, 10 seconds to 5 minutes. The amount of the anodic oxide film formed is preferably 1.0 to 5,0 g/m² and more preferably 1.5 to 4.0 g/m². Favorably in the range above, it is possible to obtain a planographic printing plate favorable in printing durability and scuff resistance in the nonimage portion.

The surface-finished support having an anodic oxide film described above may be used as the support for use in the invention, but may be subjected to another treatment as needed, for example, the treatment for expanding or sealing the micropores in the anodic oxide film described in JP-A Nos. 2001-253181 and 2001-322365 or a surface hydrophilizing treatment of immersing it in an aqueous solution containing a hydrophilic compound, for further improvement in adhesion to the upper layer, hydrophilicity, staining resistance, heat insulation efficiency, and others. The expanding and sealing treatments are not limited to the methods described above, and any one of known methods may be used.

### <Micropore sealing treatment>

Micropore sealing may carried out in steam, or in fluorozirconic acid alone, an aqueous solution containing an inorganic fluorine compound such as sodium fluoride, steam containing lithium chloride, or heat water. Among them, micropore sealing in an aqueous solution containing an inorganic fluorine compound, water vapor, or heat water is preferable. The methods are respectively described below.

### -Micropore sealing in an aqueous solution containing an inorganic fluorine compound-

The inorganic fluorine compound used in micropore sealing in an aqueous solution containing an inorganic fluorine compound is preferably a metal fluoride. Examples thereof include sodium fluoride, potassium fluoride, calcium fluoride, magnesium fluoride, sodium fluorozirconate, potassium fluorozirconate, sodium fluorotitanate, potassium fluorotitanate, ammonium fluorozirconate, ammonium fluorotitanate, potassium fluorotitanate, fluorozirconic acid, fluorotitanic acid, hexafluorosilicic acid, nickel fluoride, iron fluoride, fluorophosphoric acid, and ammonium fluorophosphate. Among them, sodium fluorozirconate, sodium fluorotitanate, fluorozirconic acid, and fluorotitanic acid are preferable.

The concentration of the inorganic fluorine compound in the aqueous solution is 0.01 mass % or more, and more preferably 0.05 mass % or more to sufficiently seal the micropores on the anodized film, and preferably 1 mass % or less, and more preferably 0.5 mass % or less from the viewpoint of stain resistance. The aqueous solution containing an inorganic fluorine compound preferably further contains a phosphate compound. The inclusion of a phosphate compound is preferable because it improves hydrophilicity on the surface of the anodized film, on-machine developability, and stain resistance.

Preferable examples of the phosphate compound include metal phosphates such as alkali metal phosphates and alkaline earth metal phosphates. Specific examples thereof include zinc phosphate, aluminum phosphate, ammonium phosphate, diammonium hydrogen phosphate, ammonium dihydrogen phosphate, monoammonium phosphate, monopotassium phosphate, monosodium phosphate, potassium dihydrogen phosphate, dipotassium hydrogen phosphate, calcium phosphate, ammonium sodium hydrogen phosphate, magnesium hydrogen phosphate, magnesium phosphate, ferrous phosphate, ferric phosphate, sodium dihydrogen phosphate, sodium phosphate, disodium hydrogen phosphate, lead phosphate, diammonium phosphate, calcium dihydrogen phosphate, lithium phosphate, phosphotungstic acid, ammonium phosphotungstate, sodium phosphotungstate, ammonium phosphomolybdate, sodium phosphomolybdate, sodium phosphite, sodium tripolyphosphate and sodium pyrophosphate. Of these phosphate compounds, sodium dihydrogen phosphate, disodium hydrogen phosphate, potassium dihydrogen phosphate and dipotassium hydrogen phosphate are preferred over the others. Among them, sodium dihydrogen phosphate, disodium hydrogen phosphate, potassium dihydrogen phosphate, and dipotassium hydrogen phosphate are preferable. The combination of an inorganic fluorine compound and a phosphate compound not particularly limited, but it is preferable that the aqueous solution contain sodium fluorozirconate as the inorganic fluorine compound and at least sodium dihydrogen phosphate as the phosphate compound. The concentration of the phosphate compound in the aqueous solution is preferably 0.01 mass % or more, and more preferably 0.1 mass % or more from the viewpoints of on-machine developability and stain resistance, and preferably 20 mass % or less, and more preferably 5 mass % or less from the viewpoint of solubility.

The proportion between the compounds in the aqueous solution is not particularly limited, but the mass ratio between the inorganic fluorine compound and the phosphate compound is preferably 1/200 to 10/1, and more preferably 1/30 to 2/1. The temperature of the aqueous solution is preferably 20°C or more, and more preferably 40°C or more, besides preferably 100°C or less, and more preferably 80°C or less. The pH of the aqueous solution is preferably 1 or more, and more preferably 2 or more, besides preferably 11 or less, and more preferably 5 or less.

The method for micropore sealing in an aqueous solution containing an inorganic fluorine compound is not particularly limited, and examples thereof include a immersion method and a spray method. Operations in these methods may be performed once or more than once individually, or those methods may be used in combination. Among the methods, the immersion method is preferable. In cases where the immersion method is used for the treatment, the treatment time is preferably 1 second or more, more preferably 3 seconds or more, besides preferably 100 seconds or less, and more preferably 20 seconds or less.

### -Micropore sealing in steam-

The micropore sealing in steam can be performed, for example, by bringing steam under elevated or normal pressure into contact with the anodic oxide film continuously or uncontinuously. The temperature of the steam is preferably 80°C or higher, more preferably 95°C or higher, and preferably 105°C or lower. The pressure of the steam is preferably in the range of (atmospheric pressure - 50 mm Aq) to (atmospheric pressure + 300 mm Aq), or (1.008×10⁵ to 1.043×10⁵ Pa). The contact time of the steam is preferably 1 second or more, more preferably 3 seconds or more and preferably 100 seconds or less, more preferably 20 seconds or less.

### -Micropore sealing in hot water-

The micropore sealing in steam is performed, for example, by immersing an aluminum plate carrying a formed anodic oxide film in hot water. The hot water may contain an inorganic salt (e.g., phosphate salt) or an organic salt. The temperature of the hot water is preferably 80°C or higher, more preferably 95°C or higher, and preferably 100°C or lower. The period of immersion in hot water is preferably 1 second or more, more preferably 3 seconds or more, and preferably 100 seconds or less, more preferably 20 seconds or less.

The hydrophilizing treatments for use in the invention include the alkali metal silicate methods described in U.S. Patent Nos. 2,714,066, 3,181,461, 3,280,734 and 3,902,734. In the method, the support is immersed and electrolyzed, for example, in an aqueous solution of sodium silicate. Also included are the method of treating the support with potassium fluorozirconate described in JP-B No. 36-22063 and the methods of treating it with polyvinylphosphonic acid described in U.S. Patent Nos. 3,276,868, 4,153,461 and 4,689,272.

The support preferably has an average center-line roughness of 0.10 to 1.2 µm. Favorably in the range above, it is possible to obtain desirable adhesiveness to the image-recording layer, favorable printing durability, and favorable staining resistance.

In ejecting the ink composition according to the invention on the surface of the hydrophilic support above, it is preferably to heat the ink composition to a temperature of preferably 40 to 80°C, more preferably 25 to 30°C and thus lower the viscosity of the ink composition to preferably 7 to 30 m Pa·s, more preferably 7 to 20 m Pa·s. In particular, use of an ink composition having an ink viscosity of 35 to 500 mP·s at 25°C is preferable as it give a better effect. Use of the method provides high ejection stability.

Commonly, radiation-curing ink compositions including the ink composition according to the invention have higher viscosity than aqueous inks normally used ink compositions, and the viscosity thereof varies significantly according to the fluctuation of temperature during ejection. The fluctuation of the ink viscosity has great influences on the change of droplet size and droplet ejection speed, consequently leading to deterioration in image quality. Thus, it is necessary to keep the temperature during ink ejection as constant as possible. Thus, the control width of the temperature in the invention is preferably temperature setting ± 5°C, more preferably temperature setting ± 2°C, and still more preferably temperature setting ± 1°C.

### <Inkjet recording apparatus>

The inkjet recording apparatus used in the invention is not particularly limited, and any one of commercially available inkjet recording apparatuses may be used. That is, in the invention, an image may be recorded on a recording medium by using a commercially available inkjet recording apparatus. The inkjet recording apparatus used in the invention has, for example, an ink-supplying system, a temperature sensor, and a radiation ray source. The ink-supplying system further has, for example, a stock tank storing an inkjet composition, a supply pipe, an inkjet composition-supplying tank immediately before the inkjet head, a filter, and a piezoelectric inkjet head. The piezoelectric inkjet head allows ejection of multi-sized dots in amounts of 1 to 100 pl, preferably, 8 to 30 pl, at a definition, for example, of 320×320 to 4,000×4,000 dpi, preferably 400×400 to 1,600×1,600 dpi, and more preferably 720×720 dpi. The "dpi" in the invention means the dot number per 2.54 cm.

As described above, since a radiation curable ink preferably has a constant temperature at the time of ejection, the section from the ink supply tank to the inkjet head may be thermally insulated and heated. The method for controlling the temperature is not limited, and preferable examples thereof include a method of providing a plurality of temperature sensors in piping areas, thereby controlling the temperature in accordance with the ink flow and the environmental temperature. The temperature sensors may be provided on the ink supply tank and in the vicinity of the nozzle of the inkjet head. The head unit to be heated is preferably thermally blocked or insulated. In order to reduce the warm-up time of the printer, or reduce the heat energy loss, it is preferable that the head unit be thermally insulated from other sections, and the thermal capacity of the whole unit to be heated be preferably smaller.
(Forming a hydrophobic image on the surface of a support by irradiating the ejected ink composition with active radiation to cure the ink composition)

The ink composition ejected onto the surface of a hydrophilic support is cured by irradiation with active radiation. At this time, if there is a sensitizing dye present together with an initiator in the ink composition, then the sensitizing dye in the system is activated into an excited state by absorption of the active radiation, accelerating decomposition of the initiator upon contact with the polymerization initiator, and a more sensitive curing reaction may be achieved.

Examples of the active radiation used herein include α rays, γ rays, electron beam, X rays, ultraviolet light, visible light, and infrared light. Although the peak wavelength of the active radiation varies according to the absorption properties of the sensitizing dye, but is, for example, 200 to 600 nm, preferably 300 to 450 nm, and more preferably 350 to 420 nm. In the invention, the polymerization initiating system has sufficient sensitivity even to a low power active radiation. Accordingly, the power of the active radiation as irradiation energy is, for example, 2,000 mJ/cm² or less, preferably from 10 to 2,000 mJ/cm², more preferably from 20 to 1,000 mJ/cm², and further preferably from 50 to 800 mJ/cm². Further, the active radiation is applied so that the illumination intensity on the exposed surface is, for example, from 10 to 2,000 mW/cm², and preferably from 20 to 1,000 mW/cm².

Mercury lamps, gas or solid state lasers and the like have been widely used as active radiation sources, and mercury lamps and metal halide lamps are widely used in ultraviolet-curing inkjet printers. However, under the current urgent need for mercury-free devices from the viewpoint of environmental protection, substitution thereof with a GaN semiconductor ultraviolet ray-emitting device is very useful industrially or environmentally. In addition, LED's (UV-LEDs) and LD's (UV-LDs) are smaller in size, longer in lifetime, higher in efficiency and lower in cost, and thus, attracting attention as a light source for radiation-curing inkjet printers.

In the invention, light-emitting diodes (LED) and laser diodes (LD) may be used as the source of active radiation. In particular, when a UV light source is needed, a UV-LED or a UV-LD may be used. For example, Nichia Corporation has marketed a violet LED having a wavelength of the main emission spectrum of between 365 nm and 420 nm. Further, when a shorter wavelength is needed, U.S. Pat. No. 6,084,250 discloses an LED capable of emitting active radiation whose wavelength is centered between 300 nm and 370 nm. Further, another violet LED is available, and irradiation can be carried out with radiation of a different UV bandwidth. The active radiation source particularly preferable in the invention is a UV-LED, and a UV-LED having a peak wavelength at 350 to 420 nm is particularly preferable. The maximum illumination intensity of the LED on a recording medium is preferably 10 to 2,000 mW/cm², more preferably 20 to 1,000 mW/cm², and particularly preferably 50 to 800 mJ/cm².

In the invention, the ink composition is preferably exposed to the active radiation, for example, for 0.01 to 120 seconds, preferably, 0.1 to 90 seconds. The irradiation condition and the basic irradiation method of the active radiation are disclosed in JP-A No. 60-132767. Specifically, the exposure is performed in a so-called shuttle process, i.e., by moving a head unit and light sources that are placed at both sides of the head unit in the ink-ejecting device. The active radiation is irradiated after a certain period (e.g., 0.01 to 0.5 second, preferably 0.01 to 0.3 second, and more preferably, 0.01 to 0.15 second) from ink ejection. It is possible to prevent bleeding of the ink ejected on the recording medium before curing by controlling the period from ink ejection as short as possible. In this manner, it becomes possible to irradiate the ink before penetration into the depth to which no light is penetrable even on a porous recording medium, suppress the amount of unreacted residual monomer, and consequently reduce odor. Alternatively, the ink may be hardened with a light from another fixed light source. WO 99/54415 Pamphlet discloses, as the irradiation method, a method of using optical fiber and a method of irradiating the recorded area with a collimated UV ray, i.e., a collimated light reflected from a mirror placed on the side face of head unit.

Thus, by using the method for producing a planographic printing plate according to the invention, a hydrophobic image is formed on the surface of a support by curing the ink composition according to the invention by irradiation with active radiation. As described above, according to an aspect of the invention, there is provided an ink composition which is cured highly sensitively by active radiation to form an image having flexibility and excellent adhesiveness to the substrate. From these facts, the planographic printing plate obtained by the method of producing a planographic printing plate according to the invention (i.e. planographic printing plate according to the invention) has a high quality image portion having excellent flexibility, and provides excellent printing durability.

As described above, according to an aspect of the invention, there is provided an ink composition from which an image being excellent in rubbing resistance and having controlled surface stickiness may be formed, and an inkjet recording method using the ink composition. Further, according to another aspect of the invention, there is provided a printed material having an image being excellent in rubbing resistance and having controlled surface stickiness, a planographic printing plate which has an image portion being excellent in rubbing resistance and having controlled surface stickiness, a method for the production of the plate.

### EXAMPLES

The present invention will be described below more concretely with reference to Examples and Comparative Examples. However, the invention is not limited to these examples.

### Example 1 (Image formation by cationic polymerization)

### 1. Preparation of Ink

<Yellow ink 1>

| | |
|---|---|
| ·C.I. Pigment Yellow 13 | 3 parts by mass |

| ·Photocationic polymerization initiator: | |
|---|---|
| Triphenylsulfonium salt (UV1-6992, manufactured by Dow Chemical Company) | 0.8 parts by mass |
| ·Senzitizing dye: 9,10-dibutoxyanthracene | 8.1 parts by mass |

| ·Polymerization compound | |
|---|---|
| Monomer: 3,4-epoxycyclohexylmethyl-3',4'-epoxycyclohexanecarboxylate (CELOXIDE 2021A: manufactured by Daicel UCB) | 15.1 parts by mass |
| Monomer: 3,7-bis(3-oxetanyl)-5-oxanonane (OXT-221: manufactured by Toagosei Co., Ltd.) | 3.8 parts by mass |
| Monomer: 3-ethyl-3-phenoxymethyl oxetane (OXT-211: manufactured by Toagosei Co., Ltd.) | 56.7 parts by mass |

| ·Fluorine-containing polymer in the invention: | |
|---|---|
| exemplary compound (1) | 0.9 parts by mass |

<Magenta ink 1 >

| | |
|---|---|
| ·C.I. Pigment Red 57:1 | 3 parts by mass |
| ·Photocationic polymerization initiator: triphenylsulfonium salt (UV1-6992, manufactured by Dow Chemical Company) | 10.8 parts by mass |
| ·Senzitizing dye: 9,10-dibutoxyanthracene | 8.1 parts by mass |

| ·Polymerization compound | |
|---|---|
| Monomer: 3,4-epoxycyclohexylmethyl-3',4'-epoxycyclohexanecarboxylate (CELOXIDE 2021 A: manufactured by Daicel UCB) | 15.1 parts by mass |
| Monomer: 3,7-bis(3-oxetanyl)-5-oxanonane (OXT-221: manufactured by Toagosei Co., Ltd.) | 3.8 parts by mass |
| Monomer: 3-ethyl-3-phenoxymethyl oxetane (OXT-211: manufactured by Toagosei Co., Ltd.) | 56.7 parts by mass |

| ·Fluorine-containing polymer in the invention: | |
|---|---|
| exemplary compound (1) | 0.9 parts by mass |

<Cyan ink 1>

| | |
|---|---|
| ·C.I. Pigment Blue 15 | 3.3 parts by mass |

| ·Photocationic polymerization initiator: | |
|---|---|
| Triphenylsulfonium salt (UV1-6992, manufactured by Dow Chemical Company) | 10.8 parts by mass |
| ·Senzitizing dye: 9,10-dibutoxyanthracene | 8.1 parts by mass |

| ·Polymerizable compound | |
|---|---|
| Monomer: 3,4-epoxycyclohexylmethyl-3',4'-epoxycyclohexanecarboxylate (CELOXIDE 2021A: manufactured by Daicel UCB) | 15.1 parts by mass |
| Monomer: 3,7-bis(3-oxetanyl)-5-oxanonane (OXT-221, manufactured by Toagosei Co., Ltd.) | 3.8 parts by mass |
| Monomer: 3-ethyl-3-phenoxymethyl oxetane (OXT 211, manufactured by Toagosei Co., Ltd.) | 56.7 parts by mass |

| ·Fluorine-containing polymer in the invention: | |
|---|---|
| exemplary compound (1) | 0.9 parts by mass |

<Black ink 1>

| | |
|---|---|
| ·C.I. Pigment Black 7 | 3 parts by mass |

| ·Photocationic polymerization initiator: | |
|---|---|
| Triphenylsulfonium salt (UV1-6992, manufactured by Dow Chemical Company) | 10.8 parts by mass |
| ·Senzitizing dye: 9,10-dibutoxyanthracene | 8.1 parts by mass |

| ·Polymerization compound | |
|---|---|
| Monomer: 3,4-epoxycyclohexylmethyl-3',4'-epoxycyclohexanecarboxylate (CELOXIDE 2021A: manufactured by Daicel UCB) | 15.1 parts by mass |
| Monomer: 3,7-bis(3-oxetanyl)-5-oxanonane (OXT-221: manufactured by Toagosei Co., Ltd.) | 3.8 parts by mass |
| Monomer: 3-ethyl-3-hydroxymethyl oxetane (OXT-101: manufactured by Toagosei Co., Ltd.) | 56.7 parts by mass |

| ·Fluorine-containing polymer in the invention: | |
|---|---|
| exemplary compound (1) | 0.9 parts by mass |

Each of the crude inks 1 prepared in the manner described above was filtered through a filter having an absolute filtration accuracy of 2 µm to give ink 1 of each color.

### 2. Inkjet image recording

Next, using the ink composition obtained above, recording on a recording medium was performed with a commercially available inkjet recording apparatus having a piezoelectric inkjet nozzle. The ink supply system was composed of a main tank, a supply pipe, an ink supply tank immediately before an inkjet head, a filter, and a piezoelectric inkjet head, and the section from the ink supply tank to the inkjet head was thermally insulated and heated. Temperature sensors were provided on the ink supply tank and in the vicinity of the nozzle of the inkjet head, and the temperature was controlled so that the nozzle section was always at 70°C±2°C. The piezoelectric inkjet head was driven so as to discharge multisize dots of 8 to 30 pl at a resolution of 720 × 720 dpi. After the dots have impacted, the exposure system, the main scanning speed, and the discharge frequency were adjusted so that UV light was focused to give an illumination intensity of 100 mW/cm² on the exposed surface and so that irradiation was started 0.1 seconds after the ink impacted onto the recording medium. Furthermore, the exposure time was made variable, and necessary exposure energy for curing was irradiated. The term dpi referred to in the invention represents the number of dots per inch (~2.54 cm).

### <Color image formation and evaluation>

The ink of each color prepared above were discharged in the order black, cyan, magenta, and yellow at an environmental temperature of 25°C, and each color was irradiated with UV rays using a metal halide lamp (trade name: VZERO 085; manufactured by Integration Technology). The total exposure energy per color was 100 mJ/cm² for all the colors, an energy level that could completely cure the inks to the point where tackiness to the touch disappeared. As recording media, a grained aluminum support, a transparent biaxially orientated polypropylene film whose surface had been treated so as to be printable, a PVC sheet (trade name: MPI 1005, 2 mm PVC vinyl, manufactured by Avery), a cast coated paper, and a commercially available recycled paper were used. Color Images were recorded on these recording media, and images having a high resolution with no dot bleeding were obtained in all cases. Further, for high quality paper, the ink did not penetrate to the reverse side, the ink was sufficiently cured, and there was hardly any odor due to unreacted monomer. Moreover, the images recorded on the film had sufficient flexibility, did not crack when bent, and there were no problems therewith in an adhesion test involving peeling with Sellotape (registered trademark).

### Example 2 (Image formation by cationic polymerization)

### <Magenta ink 2>

A magenta ink 2 was prepared in a similar manner as the magenta ink 1 prepared in Example 1, except that the exemplary compound (1) in the magenta ink 1 was replaced with the exemplary compound (2).

### Example 3 (Image formation by cationic polymerization)

### <Magenta ink 3>

A magenta ink 3 was prepared in a similar manner as the magenta ink prepared in Example 1, except that the exemplary compound (1) in the magenta ink 1 was replaced with the exemplary compound (12).

### Example 4 (Image formation by cationic polymerization)

### <Magenta ink 4>

A magenta ink 4 was prepared in a similar manner as the magenta ink 1 prepared in Example 1, except that the exemplary compound (1) in the magenta ink 1 was replaced with the exemplary compound (13).

### Example 5 (Image formation by cationic polymerization)

### <Magenta ink 5>

A magenta ink 5 was prepared in a similar manner as the magenta ink 1 prepared in Example 1, except that the 8.1 parts by mass of "9,10-dibutoxyanthracene" used as a sensitizing dye in the magenta ink 1 was replaced with 8.1 parts by mass of "DAROCUR ITX (manufactured by Ciba Specialty Chemicals)."

### Example 6 (Image formation by cationic polymerization)

### <Magenta ink 6>

A magenta ink 6 was prepared in a similar manner as the magenta ink 1 prepared in Example 1, except that the 3 parts by mass of "C.I. Pigment Red 57:1" used in the magenta ink 1 was replaced with 3 parts by mass of the "oil-soluble dye M-1 having an oxidation potential of +1.37 V" shown below.

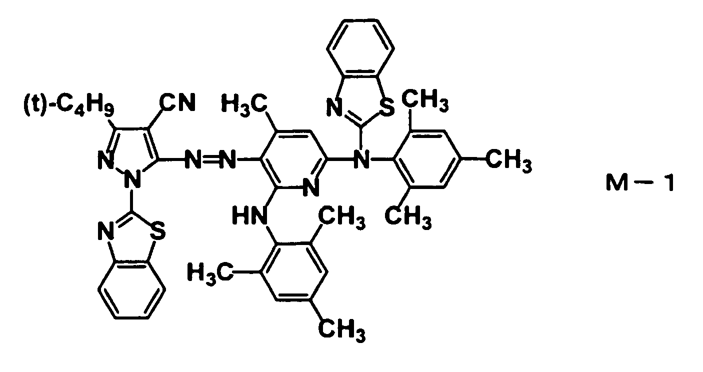

### Example 7 (Image formation by cationic polymerization)

### <Magenta ink 7>

A magenta ink 7 was prepared in a similar manner as the magenta ink 1 prepared in Example 1, except that the 3 parts by mass of "C.I. Pigment Red 57:1" used in the magenta ink 1 was replaced with 3 parts by mass of the "oil-soluble dye M-2 having an oxidation potential of +0.94 V" shown below.

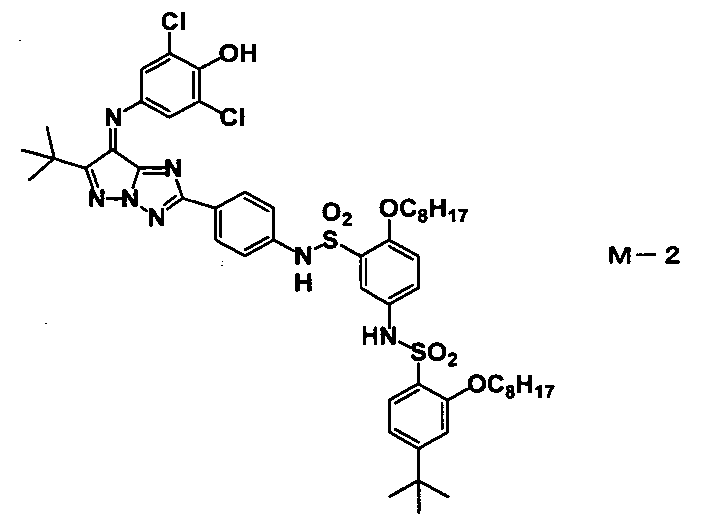

### Comparative Example 1 (Image formation by cationic polymerization)

### <Magenta ink 8>

A magenta ink 8 was prepared in a similar manner as the magenta ink 1 prepared in Example 1, except that the exemplary compound (1) was not added in the magenta ink 1.

### Comparative Example 2

### <Magenta ink 9>

A magenta ink 9 was prepared in a similar manner as the magenta ink 1 prepared in Example 1, except that the exemplary compound (1) in the magenta ink 1 was replaced with the comparative compound (1) shown below.

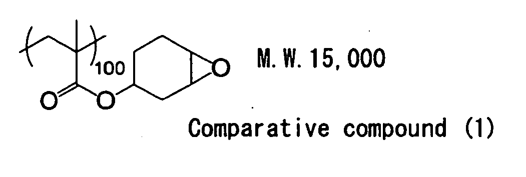

### Comparative Example 3

### <Magenta ink 10>

A magenta ink 10 was prepared in a similar manner as the magenta ink 1 in Example 1 except that the exemplary compound (1) in the magenta ink 1 was replaced with the comparative compound (2) shown below.

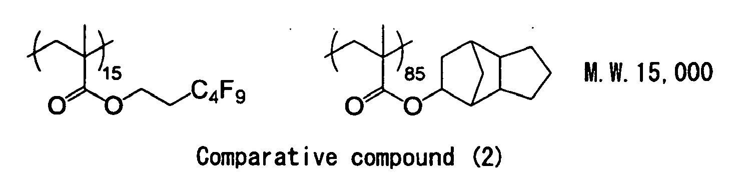

Each of the crude magenta inks 2 to 10 prepared in Examples 2 to 7 and Comparative Examples 1 to 3 described above was filtered through a filter having an absolute filtration accuracy of 2 µm to give each of magenta inks 2 to 10.

The ink viscosity of each of the ink compositions prepared in the Examples and Comparative Examples was in the range of 7 to 20 mPa·s at the ink ejection temperature.

### 1. Inkjet image recording

Each magenta image was formed in a similar manner as Example 1, except for using each of the magenta inks 2 to 10 of Examples 2 to 7 and Comparative Examples 1 to 8 prepared in the procedures described above and the magenta ink 1 prepared in Example 1, and changing the color of ejected ink to magenta only.

### 2. Evaluation of inkjet image (monochrome image)

Among the magenta images formed by the above-mentioned method using each ink, the image formed on a soft vinyl chloride sheet was evaluated according to the method described below. The results were shown in Table 1.

### (Measurement of Curing Sensitivity)

The amount of exposure energy (mJ/cm²) that was necessary to eliminate the adhesiveness on the image surface after UV irradiation was defined as curing sensitivity. A smaller value indicateed a higher sensitivity.

### (Evaluation of Blocking Property)

Onto an image after ultraviolet ray irradiation, 500 sheets of PET (size: the same both in length and in width as that of the soft vinyl chloride sheet on which the image has been formed; weight: 2 g/sheet) were superposed and left at rest for 1 day. Then, transfer to PET was visually observed. When no transfer was recognized, it was evaluated as being A. When some transfer was recognized, it was evaluated as being B.

### (Evaluation of Rubbing Resistance)

A soft vinyl chloride sheet was rubbed with an eraser (K-50 PLASTIC ERASER KEEP, manufactured by Hoshiya), and the transfer to the eraser was evaluated. When no transfer was recognized, it was evaluated as being A. When some transfer was recognized, it was evaluated as being B.

**Table 1**

| | Magenta ink No. | Curing sensitivity (mJ/cm²) | Blocking property | Rubbing resistance |
|---|---|---|---|---|
| Example 1 | 1 | 180 | A | A |
| Example 2 | 2 | 180 | A | A |
| Example 3 | 3 | 180 | A | A |
| Example 4 | 4 | 180 | A | A |
| Example 5 | 5 | 180 | A | A |
| Example 6 | 6 | 180 | A | A |
| Example 7 | 7 | 180 | A | A |
| Comparative Example 1 | 8 | 180 | B | B |
| Comparative Example 2 | 9 | 180 | B | B |
| Comparative Example 3 | 10 | 180 | B | B |

### Example 8 (Image Formation by Light-Emitting Diode (LED))

Inkjet image recording was performed in a similar manner as in Example 1, except that the magenta ink 1 prepared in Example 1 was used, the ink to be ejected was changed to only magenta, and an ultraviolet light-emitting diode (UV-LED) was used instead of the metal halide lamp (Vzero085 manufactured by Integration Technology). The UV-LED used was an NCCU033 manufactured by Nichia Corporation. The LED emited an UV ray having a wavelength of 365 nm from the tip, and a ray at an intensity of 100 mW per tip was emitted when a current of 500 mA was applied. Arranging multiple chips at intervals of 7 mm gave a power of 0.3 W/cm² on the surface of the recording medium, which was hereinafter referred to also as medium. The period from ink deposition to exposure and the duration of exposure might be changed by changing the conveyance speed of a medium and/or the distance between the head and the LED in the medium-conveyance direction. In this Example, the droplet was exposed to light 0.5 second after ink deposition. By adequate selection of the distance between the medium and the LED and of the conveyance speed setting, the exposure energy on the medium might be adjusted in the range of 0.01 to 15 J/cm².

### Comparative Example 4 (Image Formation by Light-Emitting Diode (LED))

Inkjet image recording was performed in a similar manner as Example 8, except that the magenta ink 8 prepared in Comparative Example 1 was used instead of the magenta ink 1 prepared in Example 8.

### <Evaluation of Inkjet Image>

Using each of the images formed, evaluations with respect to the curing sensitivity, blocking property and rubbing resistance were conducted according to the methods described above. The result of the evaluation was shown in Table 2.

**Table 2**

| | Magenta ink No. | Curing sensitivity (mJ/cm²) | Blocking property | Rubbing resistance |
|---|---|---|---|---|
| Example 8 | 1 | 80 | A | A |
| Comparative Example 4 | 8 | 80 | B | B |

When the results shown in Table 1 obtained by use of an ultraviolet lamp were compared with the results shown in Table 2 obtained by use of the ultraviolet light-emitting diode, it might be understood that higher sensitivity to radiation rays was achieved when the ultraviolet light-emitting diode was used.

### Example 9 (Application to Ink for Embossing)

### <<Inkjet image recording>>

First, the inks of the four colors described in Example 1 were prepared. Next, recording onto a recording medium was carried out using an experimental inkjet recorder having a piezo-type inkjet nozzle. The ink supply system included a main tank, a supply pipe, an ink supply tank immediately before an inkjet head, a filter, and a piezo-type inkjet head, and a section from the ink supply tank to the inkjet head was thermally insulated and heated. Temperature sensors were provided on the ink supply tank and in the vicinity of the nozzle of the inkjet head, and the temperature was controlled so that the nozzle section might always be at 45°C ± 2°C. The piezo-type inkjet head was driven so as to discharge multisize dots of 8 to 30 pL at a resolution of 720 × 720 dpi. The exposure system, the main scanning speed, and the discharge frequency were adjusted so that, after landing, UV light might be focused to give an exposure area illumination intensity of 2,100 mW/cm², and irradiation might start 0.1 sec after the ink landed on the recording medium. The cumulative amount of light applied to an image was adjusted so as to be 6,000 mJ/cm². A HAN250NL high-cure mercury lamp (manufactured by GS Yuasa Corporation) was used as the UV lamp. Here, dpi referred to in the invention denotes the number of dots per 2.54 cm.

As a recording material, an HK31-WF (thickness: 120 µm, PET, manufactured by Higashiyama Film Co.) was used for the embossing test described below and a TEFLEX FT-3 (thickness: 50 µm, PET, manufactured by Teijin DuPont Co.) was used for the vacuum forming test. For each sample, an image was drawn so that an ink cured film might have an average thickness of 12 µm.

### <<Methods for Processing Evaluation>>

### 1. Embossing test

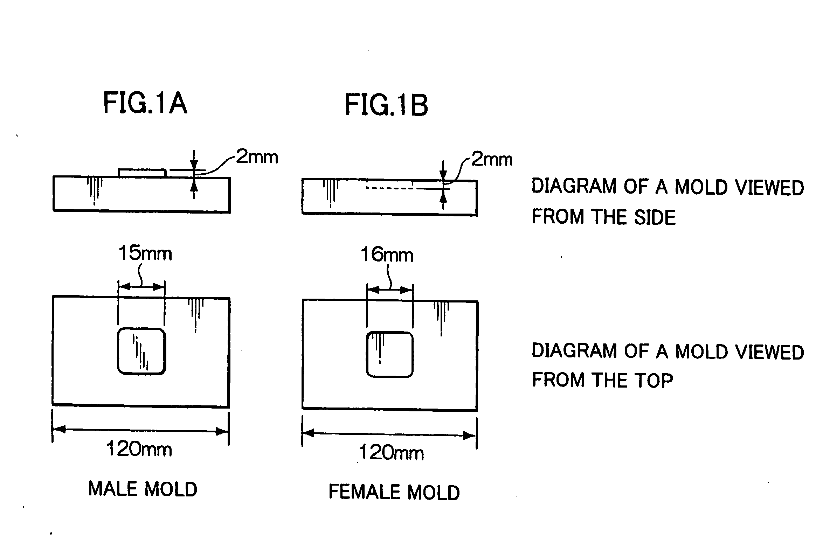

Under 25°C conditions, a printed material formed was sandwiched between a stainless steel male mold shown in Fig. 1A and a stainless steel female mold shown in Fig. 1B. The printed material was subjected to embossing by application of a load of 150 kg for 5 seconds using a press machine, MIZUHOA HANDPOWER (manufactured by Matsushita Electric Tools Co., Ltd.). Whether cracks or missing parts were formed in the embossed part of the image was visually observed. When neither cracks nor white spots were formed, it was evaluated as being "A." When a crack or a white spot was formed, it was evaluated as being "B."

### 2. Vacuum forming test

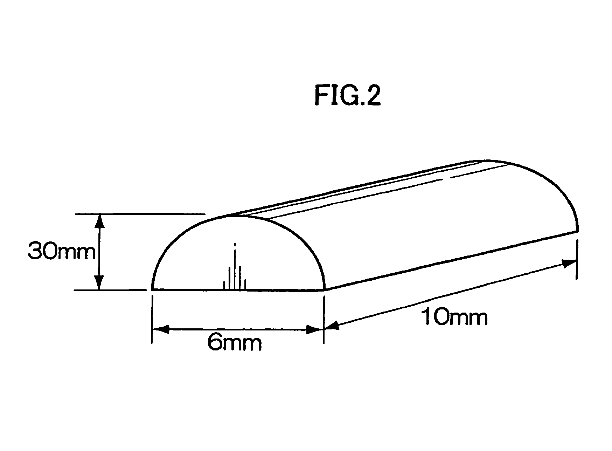

Using a vacuum forming machine, FORMING 300X (manufactured by Seiko Sangyo Co., Ltd.), the temperature of the heater was adjusted so that the temperature of the support might become 90°C and a vacuum forming wooden mold, shown in Fig. 2, was placed at the center of a vacuum table. Then, vacuum forming was performed. Whether cracks or white spots were formed in the resulting printed material was visually observed. When neither cracks nor white spots was formed, it was evaluated as being A. When a crack or a missing part was formed, it was evaluated as being B. The results were shown in Table 3.

**Table 3**

| | Embossing | Vacuum forming |
|---|---|---|
| Example 9 | A | A |

### Example 10 (Production of Planographic Printing Plate)

### <<Preparation of support>>

Molten aluminum was prepared by using an aluminum alloy in a composition (consisting of Al, Si: 0.06 mass %, Fe: 0.30 mass %, Cu: 0.025 mass %, Mn: 0.001 mass %, Mg: 0.001 mass %, Zn: 0.001 mass %, Ti: 0.03 mass %, and unavoidable impurities); and the molten aluminum was filtered and molded into ingots having a thickness of 500 mm and a width of 1,200 mm by DC casting. The surface of the ingot was scraped to an average depth of 10 mm by a surface grinder, and the ingot was heated consistently at 550°C for approximately 5 hours, and hot-rolled into a rolled plate having a thickness of 2.7 mm after it is cooled to a temperature of 400°C. The plate was heat-treated additionally at 500°C in a continuous annealing machine, and cold-rolled into a JIS1050 aluminum plate having a thickness of 0.24 mm. The width and the length of the average crystal grain in the aluminum plate obtained were respectively 50 µm and 300 µm. After the aluminum plate was cut to a width of 1,030 mm, it was subjected to the following surface treatment.

### <Surface treatment>

The following various treatments (a) to (j) were performed sequentially. The processing solution remaining on the aluminum plate was removed by nip rollers after each treatment and after washing with water.

### (a) Mechanical surface-roughening treatment

The aluminum plate was subjected to mechanical surface-roughening treatment using rotating nylon brush rollers while a suspension, as an abrasive slurry, of an abrasive material (pumice) having a specific gravity of 1.12 in water was being supplied to the aluminum plate surface. The abrasive material had an average particle size of 30 µm, and a maximum size of 100 µm. The nylon brushes were made of nylon 6/10 and had a bristle length of 45 mm and a bristle diameter of 0.3 mm. Three rotating brush rollers were used, each of which being composed of a perforated stainless-steel cylinder having a diameter of 300 mm and bundles of such nylon bristles densely attached thereto by filling them into the perforations. The apparatus had under the brush rollers two supporting rollers (200 mm in diameter), separated from each other at a distance of 300 mm. The brush rollers were pressed against the aluminum plate in such a degree that the load imposed on the driving motor rotating the brush rollers increased to a value higher by 7 kW than that as measured before the brush rollers were pressed against the aluminum plate. The direction of rotation of the brush rollers was the same as the direction of running of the aluminum plate, and the rotational speed thereof was 200 rpm.

### (b) Alkali etching treatment

The aluminum plate was etched by spraying with an aqueous etching solution, containing 2.6 mass% of caustic soda and 6.5 mass% of aluminum ions with a temperature of 70°C, to dissolve the aluminum plate in an amount of 10 g/m². Thereafter, the aluminum plate was washed with water by spraying.

### (c) Desmutting treatment

The aluminum plate was desmutted by spraying with an aqueous 1 mass% nitric acid solution (containing 0.5 mass% of aluminum ions) having a temperature of 30°C. Thereafter, the aluminum plate was washed with water by spraying. The aqueous nitric acid solution used for the desmutting treatment was a waste liquid resulting from the process of electrochemical surface-roughening treatment with an alternating current in an aqueous nitric acid solution.

### (d) Electrochemical surface-roughening treatment

The aluminum plate was continuously subjected to electrochemical surface roughening using a 60 Hz AC voltage. The electrolytic solution used was an aqueous 10.5 g/L nitric acid solution (also containing 5 g/L of aluminum ions and 0.007 mass % of ammonium ions) having a temperature of 50°C. The AC power source used was one providing a trapezoidal rectangular wave alternating current wherein the time required for the current value to increase from zero to a peak was 0.8 msec and the duty ratio was 1:1. A carbon electrode was used as a counter electrode, and ferrite was used as an auxiliary anode to carry out the electrochemical surface-roughening treatment. The current density was 30 A/dm² in terms of peak value, and the quantity of electricity was 220 C/dm² in terms of the sum of electricity at the time when the aluminum plate was functioning as an anode. 5% of the current flowing from the power source was supplied to the auxiliary anode. After this surface-roughening treatment, the aluminum plate was washed with water by spraying.

### (e) Alkali etching treatment

The aluminum plate was etched by spraying with an aqueous solution containing 26 mass% of caustic soda and 6.5 mass% of aluminum ions at a temperature of 32°C to dissolve the aluminum plate in an amount of 0.50 g/m². Thus, the smut components composed mainly of aluminum hydroxide produced by the preceding step of electrochemical surface-roughening treatment with an alternating current were removed and, simultaneously therewith, the edges of the pits formed were partly dissolved away and rounded to be smooth. Thereafter, the aluminum plate was washed with water by spraying.

### (f) Desmutting treatment

The aluminum plate was desmutted by spraying with an aqueous 15 mass% nitric acid solution (containing 4.5 mass% of aluminum ions) having a temperature of 30°C. Thereafter, the aluminum plate was washed with water by spraying. The aqueous nitric acid solution used for the desmutting treatment was a waste liquid resulting from the step of electrochemical surface-roughening treatment with an alternating current in an aqueous nitric acid solution.

### (g) Electrochemical surface roughening treatment

The aluminum plate was continuously subjected to electrochemical surface roughening using a 60 Hz AC voltage. The electrolytic solution used was an aqueous 5.0 g/L hydrochloric acid solution (containing 5 g/L of aluminum ions) having a temperature of 35°C. The AC power source used was one providing a trapezoidal rectangular wave alternating current wherein the time required for the current value to increase from zero to a peak was 0.8 msec and the duty ratio was 1:1. A carbon electrode was used as a counter electrode, and ferrite was used as an auxiliary anode to carry out the electrochemical surface-roughening treatment. The current density was 25 A/dm² in terms of peak value, and the quantity of electricity was 50 C/dm² in terms of the sum of electricity at the time when the aluminum plate was functioning as an anode. After this surface-roughening treatment, the aluminum plate was washed with water by spraying.

### (h) Alkali etching treatment

The aluminum plate was etched by spraying with an aqueous solution containing 26 mass% of caustic soda and 6.5 mass% of aluminum ions at a temperature of 32°C to dissolve the aluminum plate in an amount of 0.12 g/m². Thus, the smut components composed mainly of aluminum hydroxide produced by the preceding step of electrochemical surface-roughening treatment with an alternating current were removed and, simultaneously therewith, the edges of the pits formed were partly dissolved away and rounded to be smooth. Thereafter, the aluminum plate was washed with water by spraying.

### (i) Desmutting treatment

The aluminum plate was desmutted by spraying with an aqueous 25 mass% nitric acid solution (containing 0.5 mass% of aluminum ions) having a temperature of 60°C. Thereafter, the aluminum plate was washed with water by spraying.

### (j) Anodizing treatment

An anodizing apparatus (lengths of first and second electrolysis zones, 6 m each; lengths of first and second feed zones, 3 m each; lengths of first and second feed zones, 2.4 m each) was used to anodize the aluminum plate. Sulfuric acid was used as the electrolytic solution supplied to the first and second electrolysis zones. Each of the electrolytic solution had 50 g/L of sulfuric acid (containing 0.5 mass% of aluminum ions) and a temperature of 20°C. Thereafter, the aluminum plate was washed with water by spraying. The final amount of the oxidized film was 2.7 g/m².

### <<Preparation and evaluation of planographic printing plates>>

An image was formed and cured in the same manner as Example 1 on the aluminum support prepared above using the ink composition (magenta) of Example 1. Using this as a planographic printing plate, the image formed and printing durability were evaluated by the following methods.

### a. Image evaluation

The planographic printing plate prepared using the ink composition of Example 1 was set in a Heidelberg KOR-D printer, and printing was carried out while an ink [VALUES-G Red for sheet-fed press (manufactured by Dainippon Ink And Chemicals, Incorporated)] and dampening water [trade name: ECOLITY 2, manufactured by Fuji Film Co., Ltd.]] were supplied. The printed material after printing 100 sheets was evaluated by visual observation. From the results, it was confirmed that the image was favorable with no white spots in the image areas and no stain in the non-image areas.

### b. Printing durability

Printing was continued to give 10,000 or more sheets of high-quality printed materials with no white spots in the image areas and no stain in the non-image areas, which indicates that practically acceptable printing durability was provided.

### Example 11 (Image Formation by Radical Polymerization)

<Magenta ink 11>

| | |
|---|---|
| ·Phenoxyethyl acrylate | 36 parts by mass |
| ·Actilane 421 (*: acrylate monomer manufactured by Akcros Chemicals Ltd.) | 16.0 parts by mass |
| ·n-vinylcaprolactam | 18 parts by mass |
| ·Solsperse 32000 (dispersant manufactured by Noveon Inc.) | 0.4 parts by mass |
| ·Cinquasia Mazenta RT-355D (pigment manufactured by Ciba Specialty Chemicals) | 3.6 parts by mass |
| ·Genorad 16 (stabilizer manufactured by Rahn) | 0.05 parts by mass |
| ·Rapi-Cure DVE-3 (vinyl ether manufactured by ISP Europe) | 8.0 parts by mass |
| ·Lucirin TPO (photopolymerization initiator manufactured by BASF A.G.) | 8.5 parts by mass |
| ·Benzophenone (photopolymerization initiator) | 4.0 parts by mass |
| ·Irgacure 184 (photopolymerization initiator manufactured by Ciba Specialty Chemicals) | 4.0 parts by mass |
| ·Byk 307 (defoaming agent manufactured by BYK Chemie) | 0.05 parts by mass |

| ·Fluorine-containing polymer in the invention: | |
|---|---|
| exemplary compound (10) | 0.9 parts by mass |

### Comparative Example 5 (Image Formation by Radical Polymerization)

### <Magenta ink 12>

A magenta ink 12 was prepared in a similar manner as magenta ink 11 prepared in Example 11, except that no exemplary compound (10) was added.

Each of the crude magenta inks 11 to 12 prepared in Example 11 and Comparative Example 5 described above was filtered through a filter having an absolute filtration accuracy of 2 µm to give each of magenta inks 11 to 12.

The ink viscosity of each of the magenta inks prepared in Example 11 and Comparative Example 5 was in the range of 7 to 20 mPa·s at the ink ejection temperature.

### <Inkjet Image Recording>

Each magenta image was formed in a similar manner as Example 1, except for using each of the magenta inks 11 to 12 of Example 11 and Comparative Example 5 prepared in the procedures described above, and changing the color of ejected ink to magenta only. Then, evaluations the same as Example 1 were carried out. The results were shown in Table 4 below.

**Table 4**

| | Magenta ink No. | Curing sensitivity (mJ/cm²) | Blocking property | Rubbing resistance |
|---|---|---|---|---|
| Example 11 | 11 | 1500 | A | A |
| Comparative Example 5 | 12 | 1500 | B | B |

All publications, patent applications, and technical standards mentioned in this specification were herein incorporated by reference to the same extent as if each individual publication, patent application, or technical standard was specifically and individually indicated to be incorporated by reference.

## Claims

1. An ink composition comprising at least an initiator, a polymerizable monomer and a polymer having a molecular weight of 5,000 to 6,000 and comprising a fluorine containing group and a polymerizable group.

2. The ink composition of claim 1, wherein the polymer comprising a fluorine containing group and a polymerizable group is a polymer having a structure represented by the following formula (I): 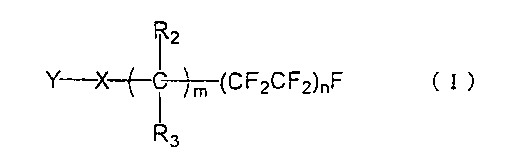 wherein, in formula (I), R₂ and R₃ each independently represent a hydrogen atom or an alkyl group having from 1 to 4 carbon atoms, Y represents a polymer chain, X represents a covalent bond or a bivalent linking group, m represents an integer of 0 or more, and n represents an integer of from 1 to 4.

3. The ink composition of claim 1, wherein a content of the fluorine containing group in the polymer comprising a fluorine containing group and a polymerizable group is in range of from 4 to 8 mmol/g

4. The ink composition of claim 1, wherein a content of the polymerizable group in the polymer comprising a fluorine containing group and a polymerizable group is 2.5 mmol/g or more.

5. The ink composition of claim 1, wherein a content of the polymer comprising a fluorine containing group and a polymerizable group is within a range of from 0.2 to 5 mass% with respect to the total solid content of the ink composition.

6. The ink composition of claim 1, wherein the ink composition contains a polymerizable monofunctional monomer as the polymerizable monomer in an amount of 50 mass% or more with respect to the total solid content of the ink composition.

7. The ink composition of claim 1, wherein the initiator is a compound which generates an acid by irradiation with radiation.

8. The ink composition of claim 1, further comprising a colorant.

9. The ink composition of claim 1, wherein the ink composition is an ink composition for ink jet recording.

10. Use of the ink composition of claim 1 for an ink printed material to which at least one processing selected from embossing, vacuum forming, pressure forming and vacuum pressure forming is to be applied.

11. An inkjet recording method comprising:
ejecting the ink composition of claim 1 onto a recording medium using an inkjet recording apparatus; and
curing the ejected ink composition by irradiating the ejected ink composition with active radiation.

12. The inkjet recording method of claim 11, wherein the active radiation is ultraviolet light emitted from a iight-emitting diode that emits ultraviolet light having an emission peak wavelength within the range of 350 to 420 nm and achieves a maximum illumination intensity of 10 to 2,000 mW/cm² at the surface of the recording medium.

13. A printed material recorded by the inkjet recording method of claim 11

14. A method for producing a planographic printing plate comprising:
ejecting the ink composition of claim 1 onto a support; and
forming a hydrophobic image on the support by irradiating the ejected ink composition with active radiation to cure the ink composition.

15. A planographic printing plate that has been produced by the method for producing a planographic plate of claim 14.

## Patentansprüche

1. Tintenzusammensetzung, umfassend mindestens einen Initiator, ein polymerisierbares Monomer und ein Polymer, das ein Molekulargewicht von 5.000 bis 60.000 aufweist und eine fluorhaltige Gruppe und eine polymerisierbare Gruppe umfasst.

2. Tintenzusammensetzung gemäß Anspruch 1, worin das Polymer, das eine fluorhaltige Gruppe und eine polymerisierbare Gruppe umfasst, ein Polymer ist, das eine durch die folgende Formel (I) dargestellte Struktur aufweist: 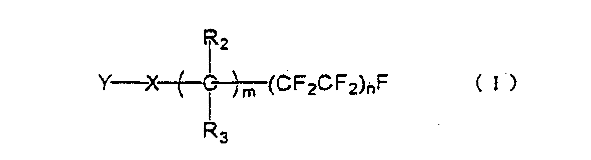 worin in der Formel (I) R₂ und R₃ jeweils unabhängig voneinander ein Wasserstoffatom oder eine Alkylgruppe mit 1 bis 4 Kohlenstoffatomen darstellen, Y eine Polymerkette darstellt, X eine kovalente Bindung oder eine bivalente Verknüpfungsgruppe darstellt, m eine ganze Zahl von 0 oder größer darstellt und n eine ganze Zahl von 1 bis 4 darstellt.

3. Tintenzusammensetzung gemäß Anspruch 1, worin der Gehalt der fluorhaltigen Gruppe in dem Polymer, das eine fluorhaltige Gruppe und eine polymerisierbare Gruppe umfasst, im Bereich von 4 bis 8 mmol/g liegt.

4. Tintenzusammensetzung gemäß Anspruch 1, worin der Gehalt der polymerisierbaren Gruppe in dem Polymer, das eine fluorhaltige Gruppe und eine polymerisierbare Gruppe umfasst, 2,5 mmol/g oder mehr beträgt.

5. Tintenzusammensetzung gemäß Anspruch 1, worin der Gehalt des Polymers, das eine fluorhaltige Gruppe und eine polymerisierbare Gruppe umfasst, im Bereich von 0,2 bis 5 Masse% liegt, bezogen auf den Gesamtfeststoffgehalt der Tintenzusammensetzung.

6. Tintenzusammensetzung gemäß Anspruch 1, worin die Tintenzusammensetzung ein polymerisierbares monofunktionales Monomer als polymerisierbares Monomer in einer Menge von 50 Masse% oder mehr enthält, bezogen auf den Gesamtfeststoffgehalt der Tintenzusammensetzung.

7. Tintenzusammensetzung gemäß Anspruch 1, worin der Initiator eine Verbindung ist, die durch Bestrahlung mit Strahlung eine Säure bildet.

8. Tintenzusammensetzung gemäß Anspruch 1, ferner umfassend ein Färbemittel.

9. Tintenzusammensetzung gemäß Anspruch 1, worin die Tintenzusammensetzung eine Tintenzusammensetzung für die Tintenstrahlaufzeichnung ist.

10. Verwendung der Zusammensetzung gemäß Anspruch 1 für ein tintenbedrucktes Material, auf das mindestens ein Verarbeitungsschritt auszuüben ist, ausgewählt aus Prägen, Vakuumformen, Druckformen und Vakuumdruckformen.

11. Tintenstrahlaufzeichnungsverfahren, umfassend:
Ausstoßen der Tintenzusammensetzung gemäß Anspruch 1 auf ein Aufzeichnungsmedium unter Verwendung einer Tintenstrahlaufzeichnungsvorrichtung; und
Härten der ausgestoßenen Tintenzusammensetzung durch Bestrahlen der ausgestoßenen Tintenzusammensetzung mit aktiver Strahlung.

12. Tintenstrahlaufzeichnungsverfahren gemäß Anspruch 11, worin die aktive Strahlung UV-Licht ist, das von einer lichtemittierenden Diode emittiert wird, die ultraviolettes Licht mit einer Emissions-Peak-Wellenlänge innerhalb des Bereichs von 350 bis 420 nm emittiert und eine maximale Beleuchtungsintensität von 10 bis 2.000 mW/cm² auf der Oberfläche des Aufzeichnungsmediums erreicht.

13. Bedrucktes Material/Drucksache, aufgezeichnet mit dem Tintenstrahlaufzeichnungsverfahren gemäß Anspruch 11,

14. Verfahren zur Herstellung einer Flachdruckplatte, umfassend:
Ausstoßen der Tintenzusammensetzung gemäß Anspruch 1 auf einen Träger; und
Bilden eines hydrohoben Bildes auf dem Träger durch Bestrahlen der ausgestoßenen Tintenzusammensetzung mit aktiver Strahlung, um die Tintenzusammensetzung zu härten.

15. Flachdruckplatte, die mit dem Verfahren zur Herstellung einer Flachdruckplatte gemäß Anspruch 14 hergestellt worden ist.

## Revendications

1. Composition d'encre comprenant au moins un initiateur, un monomère pouvant être polymérisé et un polymère ayant une masse moléculaire de 5 000 à 60 000 et comprenant un groupe contenant du fluor et un groupe pouvant être polymérisé.

2. Composition d'encre selon la revendication 1, dans laquelle le polymère comprenant un groupe contenant du fluor et un groupe pouvant être polymérisé est un polymère ayant une structure représentée par la formule (I) suivante : 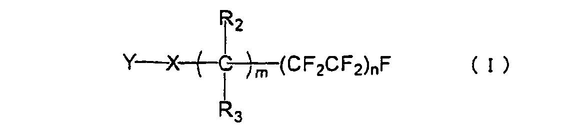 dans laquelle, dans la formule (I), R₂ et R₃ représentent chacun indépendamment un atome d'hydrogène ou un groupe alkyle ayant de 1 à 4 atomes de carbone, Y représente une chaîne de polymère, X représente une liaison covalente ou un groupe de liaison bivalent, m représente un entier de 0 ou plus, et n représente un entier de 1 à 4.

3. Composition d'encre selon la revendication 1, dans laquelle une teneur du groupe contenant du fluor dans le polymère comprenant un groupe contenant du fluor et un groupe pouvant être polymérisé est dans la plage de 4 à 8 mmol/g

4. Composition d'encre selon la revendication 1, dans laquelle une teneur du groupe pouvant être polymérisé dans le polymère comprenant un groupe contenant du fluor et un groupe pouvant être polymérisé est de 2,5 mmol/g ou plus.

5. Composition d'encre selon la revendication 1, dans laquelle une teneur du polymère comprenant un groupe contenant du fluor et un groupe pouvant être polymérisé est dans une plage de 0,2 à 5 % en masse par rapport à la teneur totale en solides de la composition d'encre.

6. Composition d'encre selon la revendication 1, dans laquelle la composition d'encre contient un monomère monofonctionnel pouvant être polymérisé en tant que monomère pouvant être polymérisé en une quantité de 50 % en masse ou plus par rapport à la teneur totale en solides de la composition d'encre.

7. Composition d'encre selon la revendication 1, dans laquelle l'initiateur est un composé qui produit un acide par irradiation avec un rayonnement.

8. Composition d'encre selon la revendication 1, comprenant en outre un colorant.

9. Composition d'encre selon la revendication 1, dans laquelle la composition d'encre est une composition d'encre pour enregistrement à jet d'encre.

10. Utilisation de la composition d'encre selon la revendication 1 pour une matière imprimée à l'encre à laquelle au moins un traitement sélectionné parmi l'estampage, le formage sous vide, le formage sous pression et le formage sous pression sous vide doit être appliqué.

11. Procédé d'enregistrement à jet d'encre comprenant :
l'éjection de la composition d'encre selon la revendication 1 sur un support d'enregistrement en utilisant un appareil d'enregistrement à jet d'encre ; et
le durcissement de la composition d'encre éjectée en irradiant la composition d'encre éjectée avec un rayonnement actif.

12. Procédé d'enregistrement à jet d'encre selon la revendication 11, dans lequel le rayonnement actif est une lumière ultraviolette émise à partir d'une diode électroluminescente qui émet une lumière ultraviolette ayant une longueur d'onde à pic d'émission dans la plage de 350 à 420 nm et qui atteint une intensité d'éclairage maximale de 10 à 2 000 mW/cm² au niveau de la surface du support d'enregistrement.

13. Matière imprimée enregistrée par le procédé d'enregistrement à jet d'encre selon la revendication 11

14. Procédé pour produire une plaque d'impression planographique comprenant :
l'éjection de la composition d'encre selon la revendication 1 sur un support ; et
la formation d'une image hydrophobe sur le support en irradiant la composition d'encre éjectée avec un rayonnement actif pour durcir la composition d'encre.

15. Plaque d'impression planographique qui a été produite par le procédé de production d'une plaque planographique selon la revendication 14.
